# EUROPEAN PATENT APPLICATION

(11) **EP 2 942 328 A1**
(43) Date of publication of application: **11.11.2015**
(21) Application number: 13866639.1
(22) Date of filing: 26.12.2013
(51) Int. Cl.: C01G 23/047

(54) **SURFACE COATED PARTICLES AND USE OF SAME**

(30) Priority: 28.12.2012 JP 2012287083; 28.12.2012 JP 2012287113; 28.12.2012 JP 2012287117
(71) Applicant: Seiko Epson Corporation, Shinjuku-ku Tokyo 163-0811 (JP)
(72) Inventor: WACHI Hiroko, Sodegaura-shi Chiba 299-0265 (JP); EGAMI Yukiko, Sodegaura-shi Chiba 299-0265 (JP); MAEKAWA Hiroshi, Sodegaura-shi Chiba 299-0265 (JP)
(74) Representative: Miller Sturt Kenyon
(86) International application number: PCT/JP2013/084961
(87) International publication number: WO 2014/104225

(57) **Abstract**

A surface-coated particle that includes a titanium dioxide particle, and a coating film that covers the titanium dioxide particle, and a method for producing the same, are disclosed. The surface-coated particle includes an element (a) that is phosphorus or sulfur, and an element (b) that is at least one element selected from elements (excluding titanium) respectively belonging to Groups 2 to 12 in the periodic table, the concentration of the element (a) in the surface-coated particle being 2 atom% or more, provided that the concentration of titanium in the surface-coated particle is 100 atom%, and the atomic ratio "(b)/(a)" of the element (b) to the element (a) in the surface-coated particle being more than 0.5.

## Description

### TECHNICAL FIELD

The present invention relates to a surface-coated particle and use thereof.

### BACKGROUND ART

Titanium dioxide particles have been used as a white pigment from a long time ago. In recent years, titanium dioxide particles have been used for a coating material, a cosmetic preparation, and a formed article (e.g., chemical fibers, film, and optical material) as a UV-blocking agent, a photocatalyst, an infrared scattering agent, a functional filler, a high-refractive-index material, a heat-resistant material, a gas barrier material, an insulating material, and the like.

When using titanium dioxide particles for such applications, titanium dioxide particles are mixed with a dispersion medium to prepare a slurry (which is applied to the application target), or mixed with a resin or the like, and formed into a film or a formed article. In this case, it is necessary to disperse titanium dioxide in the dispersion medium, the resin, or the like in a homogenous state so that the desired function can be efficiently obtained.

However, since titanium dioxide has insulating properties, and easily aggregates due to charge (since the fluidity of the titanium dioxide powder is poor) when mixed with the resin, it is difficult to homogenously mix titanium dioxide with the resin (i.e., it is difficult to disperse titanium dioxide in the resin). Since titanium dioxide is dispersed to only a small extent in a polar dispersion medium such as water, and easily undergoes hard-caking, it is difficult to uniformly apply the resulting slurry.

Therefore, the surface of the titanium dioxide particles may be covered with a metal oxide polar group to make the surface of the titanium dioxide particles hydrophilic, so that the powder exhibits improved fluidity and improved dispersibility in a polar dispersion medium.

The surface of the titanium dioxide particles may be covered in order to suppress a photocatalytic function and improve weatherability while maintaining whiteness when using the titanium dioxide particles as a pigment.

The surface of the titanium dioxide particles may also be covered in order to provide an organic polymer (e.g., resin) with heat resistance, optical properties, and insulating properties.

The effects of surface coating are improved by uniformly covering the entire particles.

It is necessary to ensure excellent caking resistance and excellent redispersibility in order to implement uniform application or mixing. Note that the term "caking" used herein refers to a state in which a powder in a slurry precipitates and aggregates during long-term storage, and cannot be dispersed again.

In order to solve the above problems, Patent Literature 1 proposes a high-concentration titanium dioxide aqueous dispersion that includes water (dispersion medium), ultrafine titanium dioxide particles, and a condensed phosphate, for example. Patent Literatures 2 to 5 propose a technique that utilizes a treatment with a plurality of metal oxides and phosphoric acid in order to provide optical properties, durability, light resistance, weatherability, and the like.

The attempts described below have also been made.

Titanium dioxide shows a decrease in dispersibility in a polar dispersion medium such as water, easily precipitates, and easily undergoes hard-caking as the primary particle size increases, and the specific surface area decreases. In particular, titanium dioxide having a primary particle size of more than 20 to 40 nm is dispersed to only a small extent, and easily precipitates.

In such a case, titanium dioxide may not sufficiently exhibit its excellent functions (e.g., whiteness, UV-blocking capability, and photocatalytic function). In particular, when using titanium dioxide particles as a white pigment, a UV-blocking agent, or an infrared scattering agent, the properties are controlled by adjusting the primary particle size of the titanium dioxide particles. Titanium dioxide having a primary particle size of 70 nm or more is normally used for these applications.

Therefore, the surface of the titanium dioxide particles may be covered with a metal oxide polar group to make the surface of the titanium dioxide particles hydrophilic, so that the powder exhibits improved fluidity and improved dispersibility in a polar dispersion medium.

The surface of the titanium dioxide particles may be covered in order to suppress a photocatalytic function and improve weatherability while maintaining whiteness when using the titanium dioxide particles as a pigment.

If the surface treatment is insufficient, the particles may aggregate through an untreated part, and the effect of improving dispersibility through the surface treatment may be sufficient. In this case, an increase in viscosity, precipitation, and hard-caking may occur.

In order to solve the above problems, Patent Literature 1 proposes a high-concentration titanium dioxide aqueous dispersion that includes water (dispersion medium), ultrafine titanium dioxide particles, and a hydrous aluminum oxide, for example. Patent Literatures 2 and 3 propose a technique that utilizes a treatment with a plurality of metal oxides in order to provide optical properties and the like. Patent Literature 6 proposes a technique that covers titanium oxide with a specific compound in order to reducing yellowing due to a reaction between a (meth)acrylic monomer and titanium oxide when mixed with a resin while maintaining the dispersibility of titanium oxide in the (meth)acrylic monomer, for example.

The applications described below have also been studied.

A titanium dioxide slurry prepared using a dispersion medium such as water has been used as a white pigment or a white ink.

In recent years, ink-jet printing has attracted attention as a method for forming characters, a picture, a pattern, and the like on a base such as a transparent film. Ink-jet printing is a printing method that ejects a small ink droplet so that the ink droplet adheres to a recording medium such as paper to achieve printing. When printing an image on such a base, it is necessary to mask the undercoat in order to obtain a printed matter with a good color. A white ink with a high masking capability is normally used to mask the undercoat, and an inorganic pigment (particularly titanium dioxide) is normally used as the pigment.

However, a pigment such as titanium dioxide has high specific gravity, is dispersed to only a small extent in a dispersion medium such as water, easily precipitates, and undergoes caking (i.e., cannot be dispersed again). Moreover, gelation and an increase in viscosity may occur (i.e., it is difficult to use the pigment for an ink) due to a reaction between the surfaces of the particles, and uneven whiteness may occur, for example.

When a pigment is used for an ink-jet ink for which low viscosity is required, it is important to suppress precipitation of the pigment (improve the water-dispersibility of the pigment). When precipitation of the pigment has occurred, the inkjet nozzle may be clogged, or the storage stability of the ink may deteriorate, for example.

It is possible to suppress precipitation by reducing the particle size of titanium dioxide. In this case, however, the degree of whiteness and the masking capability may deteriorate.

Patent Literature 7 discloses that a white pigment with excellent dispersibility can be obtained by covering the surface of titanium dioxide particles with porous silica. However, the degree of whiteness deteriorates when the surface of titanium dioxide particles is covered with silica having a low refractive index. It is known that silica is easily dissolved in an alkali. Therefore, the ink preparation conditions are limited. Patent Literature 8 discloses a method that forms a solid white layer by an inkjet method using a porous titanium dioxide pigment. Patent Literature 8 is silent about the details of the titanium dioxide pigment. A titanium dioxide pigment normally easily precipitates, and exhibits poor long-term storage stability.

Patent Literature 9 discloses that the degree of whiteness and storage stability can be maintained by utilizing silica having a specific gravity lower than that of titanium dioxide. However, since silica is inferior to titanium dioxide as to degree of whiteness and masking capability, it is necessary to use titanium dioxide in combination with silica, and it is difficult to ensure storage stability.

### CITATION LIST

### PATENT LITERATURE

Patent Literature 1: JP-A-7-257923
Patent Literature 2: JP-B-3-2914
Patent Literature 3: JP-T-2002-514254
Patent Literature 4: JP-T-2010-526015
Patent Literature 5: JP-A-2011-136871
Patent Literature 6: JP-A-2011-74328
Patent Literature 7: JP-A-10-130527
Patent Literature 8: JP-A-2008-200854
Patent Literature 9: JP-A-2010-174100

### SUMMARY OF INVENTION

### TECHNICAL PROBLEM

In Patent Literature 1, a condensed phosphate is used as a dispersant when preparing a high-concentration slurry of the surface-treated titanium dioxide particles. However, redispersibility and hard-caking resistance cannot be obtained during long-term storage when a condensed phosphate is merely added to a slurry solution of the surface-treated titanium dioxide particles.

Patent Literatures 2 to 5 disclose improving light resistance, weatherability, and powder fluidity by applying a treatment with a metal oxide or a metal phosphate. However, Patent Literatures 2 to 5 are silent about an improvement in dispersibility of titanium dioxide particles in a polar dispersion medium such as water, as well as redispersibility and hard-caking resistance.

The invention was conceived in order to solve the above problems, and relates to a surface-coated particle that exhibits excellent water-dispersibility, excellent redispersibility, and excellent hard-caking resistance, and a method for producing the same.

### SOLUTION TO PROBLEM

Several aspects of the invention provide the following.
(1) A surface-coated particle including a titanium dioxide particle, and a coating film that covers the titanium dioxide particle,
   the surface-coated particle including:
   an element (a) that is phosphorus or sulfur; and
   an element (b) that is at least one element selected from elements (excluding titanium) respectively belonging to Groups 2 to 12 in the periodic table,
   the concentration of the element (a) in the surface-coated particle being 2 atom% or more, provided that the concentration of titanium in the surface-coated particle is 100 atom%, and
   the atomic ratio "(b)/(a)" of the element (b) to the element (a) in the surface-coated particle being more than 0.5.
(2) The surface-coated particle according to (1), wherein the element (a) is phosphorus.
(3) The surface-coated particle according to (2), the surface-coated particle having a peak at a chemical shift of -11 to -15 ppm when analyzed by ³¹P-NMR spectroscopy.
(4) The surface-coated particle according to any one of (1) to (3), the surface-coated particle having an isoelectric point of pH 4 or less, the isoelectric point being a point at which the zeta potential is 0.
(5) The surface-coated particle according to any one of (1) to (4), the concentration of the element (a) in the surface-coated particle being 2 to 30 atom%, and the concentration of the element (b) in the surface-coated particle being more than 1 atom% and 40 atom% or less, provided that the concentration of titanium in the surface-coated particle is 100 atom%.
(6) The surface-coated particle according to any one of (1) to (5), wherein the atomic ratio "(b)/(a)" of the element (b) to the element (a) is 1.0 or more.
(7) The surface-coated particle according to any one of (1) to (6), wherein the coating film includes a complex of the element (a) and the element (b).
(8) A method for producing a surface-coated particle that includes a titanium dioxide particle, and a coating film that covers the titanium dioxide particle,
   the surface-coated particle including:
   an element (a) that is phosphorus or sulfur; and
   an element (b) that is at least one element selected from elements (excluding titanium) respectively belonging to Groups 2 to 12 in the periodic table,
   the concentration of the element (a) in the surface-coated particle being 2 atom% or more, provided that the concentration of titanium in the surface-coated particle is 100 atom%, and
   the atomic ratio "(b)/(a)" of the element (b) to the element (a) in the surface-coated particle being more than 0.5,
   the method including:
   mixing the titanium dioxide particle with a compound that includes the element (a) to obtain a mixture; and
   mixing the mixture with a solution that includes an acidic metal salt that includes the element (b), followed by drying or calcining, or both, to obtain the surface-coated particle.
(9) The method for producing a surface-coated particle according to (8), wherein the element (a) is phosphorus.
(10) An aqueous ink pigment including a titanium dioxide particle, and a coating film that covers the titanium dioxide particle,
   the aqueous ink pigment including:
   an element (a) that is phosphorus; and
   an element (b) that is at least one element selected from zirconium, cerium, zinc, scandium, yttrium, hafnium, magnesium, and barium,
   x, y, and z being present within (including a position on each side) an area enclosed by a quadrangle formed in a ternary diagram (x, y, z), the quadrangle having points A (91, 3, 6), B (84, 2, 14), C (79, 6, 15), and D (79, 9, 12) as vertices, x being the concentration (atom%) of titanium in the aqueous ink pigment, y being the concentration (atom%) of the element (a) in the aqueous ink pigment, and z being the concentration (atom%) of the element (b) in the aqueous ink pigment.
(11) The aqueous ink pigment according to (10), the aqueous ink pigment having an isoelectric point of pH 4 or less, the isoelectric point being a point at which the zeta potential is 0.
(12) The aqueous ink pigment according to (10) or (11), the coating film including the element (a) and the element (b).
(13) An aqueous ink composition including the aqueous ink pigment according to any one of (10) to (12).
(14) A particle including a titanium dioxide particle, and at least one element selected from elements (excluding titanium) respectively belonging to Groups 2 to 12 in the periodic table,
   the ratio (A_{BET(H2O)}/A_{BET(N2)}) of the specific surface area (A_{BET(H2O)}) of the particle determined using a water vapor adsorption method to the specific surface area (A_{BET(N2)}) of the particle determined using a nitrogen adsorption method being 1.0 or more.
(15) The particle according to (14), wherein the elements respectively belonging to Groups 2 to 12 in the periodic table are zirconium, cerium, zinc, scandium, yttrium, hafnium, magnesium, and barium.
(16) An aqueous dispersion including the particle according to (14) or (15), and an aqueous medium, a plurality of the particles being dispersed in the aqueous medium.
(17) The aqueous dispersion according to (16), including the plurality of particles in a ratio of 1 to 60 wt% based on the aqueous dispersion (=100 wt%).

### ADVANTAGEOUS EFFECTS OF INVENTION

The surface-coated particle according to one aspect of the invention exhibits excellent dispersibility in a polar dispersion medium such as water. An aqueous dispersion that includes titanium dioxide at a high concentration, exhibits excellent redispersibility and excellent hard-caking resistance, and includes only a small amount of large particles, can be obtained by dispersing the surface-coated particle according to one aspect of the invention in water. It is possible to apply or mix titanium dioxide in a homogeneously dispersed state while maintaining the photocatalytic function, or apply or mix titanium dioxide in a homogeneously dispersed state while suppressing the photocatalytic function, by controlling the amount of coating (covering).

Since the surface-coated particle exhibits excellent redispersibility and excellent hard-caking resistance, it is possible to obtain the desired formed article with good reproducibility.

### BRIEF DESCRIPTION OF DRAWINGS

The above object, further objects, the features, and the advantages of the invention will be more readily understood from the following detailed description of the embodiments of the invention taken in conjunction with the accompanying drawings as described below.
FIG. 1 illustrates the EDS elemental mapping results of the surface-coated particle according to the first embodiment.
FIG. 2 is a TEM photograph of the surface-coated particle according to the first embodiment.
FIG. 3 illustrates an STEM image and an HAADF-STEM image of the surface-coated particle according to the first embodiment.
FIG. 4 illustrates the EELS line analysis results of the surface-coated particle according to the first embodiment.
FIG. 5 illustrates an STEM image and an HAADF-STEM image of the particles obtained in Comparative Example a4.
FIG. 6 illustrates the EELS line analysis results of the particles obtained in Comparative Example a4.
FIG. 7 illustrates the NMR analysis results of the surface-coated particle according to the first embodiment.
FIG. 8 illustrates the surface potential measurement results of the surface-coated particle according to the first embodiment.
FIG. 9 illustrates the EDS elemental mapping results of the particle according to the second embodiment.
FIG. 10 is a TEM photograph of the particle according to the second embodiment.
FIG. 11 illustrates an STEM image and an HAADF-STEM image of the particle according to the second embodiment.
FIG. 12 illustrates the EELS line analysis results of the particle according to the second embodiment.
FIG. 13 illustrates the NMR analysis results of the particle according to the second embodiment.
FIG. 14 illustrates the surface potential measurement results of the particle according to the second embodiment.
FIG. 15 illustrates the range of the concentration ratio of the elements included in the aqueous ink pigment according to the third embodiment.
FIG. 16 illustrates the EDS elemental mapping results of the aqueous ink pigment according to the third embodiment.

### DESCRIPTION OF EMBODIMENTS

Surface-coated particles and use thereof according to first to third embodiments of the invention are described below.

### First embodiment

The surface-coated particle according to the first embodiment and a method for producing the same are described below. Note that the expression "A to B" used herein in connection with a numerical range means "A or more and B or less (equal to or more than A and equal to or less than B)" unless otherwise specified.

### <Surface-coated particle>

The surface-coated particle according to the first embodiment includes a titanium dioxide particle, and a coating film that covers the titanium dioxide particle, the surface-coated particle including: an element (a) that is phosphorus or sulfur; and an element (b) that is at least one element selected from elements (excluding titanium) respectively belonging to Groups 2 to 12 in the periodic table, the concentration of the element (a) in the surface-coated particle being 2 atom% or more, provided that the concentration of titanium in the surface-coated particle is 100 atom%, and the atomic ratio "(b)/(a)" of the element (b) to the element (a) in the surface-coated particle being more than 0.5.

The surface-coated particle according to the first embodiment is obtained by a method that includes mixing the titanium dioxide particle with a compound that includes the element (a) to obtain a mixture; and mixing the mixture with a solution that includes an acidic metal salt that includes the element (b), followed by drying or calcining, or both, to obtain the surface-coated particle.

The surface-coated particle according to the first embodiment includes the titanium dioxide particle as a core particle, the titanium dioxide particle being covered (coated) with the coating film.

The specific surface area of the surface-coated particle according to the first embodiment may be determined (calculated) using the Brunauer-Emmett-Teller (BET) method from the nitrogen adsorption-desorption measurement results. Specifically, the specific surface area (m²/g) (BET method) of the surface-coated particle according to the first embodiment may be determined by a nitrogen adsorption method at a liquid nitrogen temperature (77K) using a device "BELSORP-mini" (manufactured by BEL Japan, Inc.).

The specific surface area of the surface-coated particle according to the first embodiment may also be determined (calculated) using the BET method from the water vapor adsorption-desorption measurement results. Specifically, the specific surface area (m²/g) (BET method) of the surface-coated particle according to the first embodiment may be determined at an adsorption temperature of 25°C (adsorption gas: H₂O) using a device "BELSORP-max" (manufactured by BEL Japan, Inc.).

The specific surface area (A_{BET(N2)}) of the surface-coated particle determined using the nitrogen adsorption method is not particularly limited, but is preferably 1 to 350 m²/g, and more preferably 2 to 270 m²/g.

It is preferable that the ratio (A_{BET(H2O}/A_{BET(N2)}) of the specific surface area (A_{BET(H2O)}) to the specific surface area (A_{BET(N2)}) of the surface-coated particle according to the first embodiment be 0.7 or more. The ratio (A_{BET(H2O)}/A_{BET(N2)}) is more preferably 0.85 or more, still more preferably 1.2 or more, and yet more preferably 2.0 or more. The ratio (A_{BET(H2O)}/A_{BET(N2)}) represents the water absorption of the particle per unit surface area. The surface of the particle has high hydrophilicity when the ratio (A_{BET(H2O)}/A_{BET(N2)}) is large.

The ratio (A_{BET(H2O)}/A_{BET(N2)}) can be adjusted by adjusting the type of hydrophilic group present on the surface of the particle, the coating ratio, and the heating temperature (drying and/or calcining temperature) after performing the surface coating treatment.

### (Titanium dioxide particle)

The titanium dioxide particle used in connection with the first embodiment may be produced using various methods. For example, the titanium dioxide particle may be produced by subjecting a titanium tetrachloride aqueous solution to alkali neutralization and hydrolysis, and calcining the resulting hydrous titanium dioxide, or heating hydrous titanium dioxide in the presence of sodium hydroxide, and heating and aging the resulting reaction product in the presence of an acid. The resulting titanium dioxide particle may be optionally be further calcined to adjust the particle size and the particle shape.

The titanium dioxide particle may also be produced by subjecting a titanium sulfate aqueous solution or a titanium tetrachloride aqueous solution to hydrolysis with heating, and deflocculating the resulting hydrous titanium dioxide using an acid, optionally followed by calcining. The titanium dioxide particle may also be produced by subjecting a titanium halide such as titanium chloride to gas-phase oxidation at a high temperature, and grinding the resulting titanium dioxide to have the desired particle size. The titanium dioxide particle may also be produced by subjecting a titanium alkoxide to a sol-gel reaction, and drying and calcining the resulting reaction product.

Titanium dioxide may have an anatase-type crystal structure or a rutile-type crystal structure. In the first embodiment, titanium dioxide having an anatase-type crystal structure or titanium dioxide having a rutile-type crystal structure may be used alone, or titanium dioxide having an anatase-type crystal structure and titanium dioxide having a rutile-type crystal structure may be used in combination.

The average primary particle size of titanium dioxide is not particularly limited, but may be 8 to 1200 nm, for example.

### (Coating film)

In the first embodiment, the coating film covers the titanium dioxide particle. The coating film may cover the entire surface of the titanium dioxide particle, or may cover at least part of the surface of the titanium dioxide particle.

It is preferable that the coating film include an element (a) that is phosphorus or sulfur, and an element (b) that is at least one element selected from elements (excluding titanium) respectively belonging to Groups 2 to 12 in the periodic table.

It is preferable that the coating film uniformly and continuously cover the surface of the titanium dioxide particle to form a core-shell structure with the titanium dioxide particle, since excellent water-dispersibility can be obtained.

The state of the coating film may be observed using a field emission transmission electron microscope (FE-TEM).

In the first embodiment, it is preferable to uniformly form the coating film having a thickness equal to about 1 to 30% of the primary particle size on the surface of the titanium dioxide particle, for example.

A preferable thickness differs depending on the desired function, and the particle size and the crystal form of titanium dioxide. A thin film is normally preferable in order to prevent a situation in which the functions (e.g., UV-blocking effect, infrared-blocking effect, catalytic (photocatalytic) function, and optical properties) of the titanium dioxide particle are impaired, and a thick film is preferable when it is desired to suppress the functions of the titanium dioxide particle. It is considered that it is possible to obtain such a surface-coated particle using the production method according to the first embodiment.

### (Element (a) that is phosphorus or sulfur)

In the first embodiment, phosphorus is preferable as the element (a) from the viewpoint of affinity to titanium dioxide.

### (Element (b) that is at least one element selected from elements (excluding titanium) respectively belonging to Groups 2 to 12 in the periodic table)

Examples of the elements belonging to Group 2 that may be used as the element (b) include Be, Mg, Ca, Sr, Ba, and the like. Examples of the elements belonging to Group 3 that may be used as the element (b) include Sc, Y, lanthanoid, and the like. Examples of the elements belonging to Group 4 that may be used as the element (b) include Zr, Hf, and the like. Examples of the elements belonging to Group 5 that may be used as the element (b) include V, Nb, Ta, and the like. Examples of the elements belonging to Group 6 that may be used as the element (b) include Cr, Mo, W, and the like. Examples of the elements belonging to Group 7 that may be used as the element (b) include Mn, Tc, Re, and the like. Examples of the elements belonging to Group 8 that may be used as the element (b) include Fe, Ru, Os, and the like. Examples of the elements belonging to Group 9 that may be used as the element (b) include Co, Rh, Ir, and the like. Examples of the elements belonging to Group 10 that may be used as the element (b) include Ni, Pd, Pt, and the like. Examples of the elements belonging to Group 11 that may be used as the element (b) include Cu, Ag, Au, and the like. Examples of the elements belonging to Group 12 that may be used as the element (b) include Zn, Cd, Hg, and the like. Among these, zirconium, cerium, zinc, scandium, the yttrium, hafnium, magnesium, and barium are preferable, zirconium, yttrium, and hafnium are more preferable, and zirconium is particularly preferable.

The distribution of the element (b) in the surface-coated particle can be observed by transmission electron microscopy (TEM)-electron energy-loss spectroscopy (EELS) (TEM-EELS). According to TEM-EELS line analysis, the element (b) is detected on the outer side of titanium (Ti), and the (b)/Ti ratio is higher on the outer side of the particle. Therefore, it is considered that the coating film includes the element (b).

The compositional ratio of the surface-coated particle can be determined by X-ray fluorescence analysis (XRF).

The concentration of the element (a) in the surface-coated particle is 2 atom% or more, provided that the concentration of titanium in the surface-coated particle is 100 atom%. The concentration of the element (a) in the surface-coated particle is preferably 2 to 30 atom%, more preferably 2 to 25 atom%, and still more preferably 2 to 20 atom%, since excellent water-dispersibility can be obtained. The concentration of the element (b) in the surface-coated particle is preferably more than 1 atom% and 40 atom% or less, provided that the concentration of titanium in the surface-coated particle is 100 atom%. The concentration of the element (b) in the surface-coated particle is more preferably 2 to 30 atom%, and still more preferably 5 to 25 atom%, since excellent water-dispersibility can be obtained.

The atomic ratio "(b)/(a)" of the element (b) to the element (a) can be calculated from the compositional ratio of the surface-coated particle determined by XRF. The atomic ratio "(b)/(a)" in the surface-coated particle according to the first embodiment is more than 0.5, preferably 1.0 or more, and more preferably 1.5 or more. The upper limit of the atomic ratio "(b)/(a)" is not particularly limited, but may be 15 or less, or 10 or less, for example.

The compositional distribution of the surface-coated particle can be determined by energy dispersive X-ray spectrometry (EDS) elemental mapping. When the surface-coated particle is subjected to EDS elemental mapping, the distribution of titanium, the distribution of the element (a), and the distribution of the element (b) almost agree with each other. An uneven distribution of the element (a) and the element (b) is not observed.

The bonding state of a phosphorus atom or a sulfur atom included in the surface-coated particle according to the first embodiment can be analyzed by ³¹P-NMR spectroscopy or ³³S-NMR spectroscopy.

For example, when the element (a) is phosphorus, it is preferable that the surface-coated particle according to the first embodiment have the main peak at a chemical shift of -11 to -15 ppm.

It is preferable that the surface-coated particle according to the first embodiment have a structure in which the titanium dioxide particle is covered with the coating film that includes a complex that includes the element (a) and the element (b), since excellent water-dispersibility can be obtained.

The elements belonging to Group 2 that may be used as the element (b) may react with a phosphoric acid group (raw material) used to produce the surface-coated particle (described later) to form an apatite. The elements respectively belonging to Groups 3 to 12 that may be used as the element (b) have a Lewis acid-Lewis base relationship with a phosphoric acid group or a sulfuric acid group (raw material) used to produce the surface-coated particle (described later), and may form complex with phosphorus or sulfur used as the element (a).

Since a phosphoric acid group and a sulfuric acid group have a Lewis acid-base relationship with titanium included in titanium dioxide (mother particle), it is considered that a phosphoric acid group or a sulfuric acid group is bonded to the surface of the titanium dioxide particle, and forms an apatite or a complex with the element (b) to cover the titanium dioxide particle, or the complex is bonded to titanium dioxide to cover the titanium dioxide particle. The surface-coated particle according to the first embodiment exhibits excellent water-dispersibility since the surface-coated particle includes the titanium dioxide particle, the element (a), and the element (b), the concentration of the element (a) in the surface-coated particle is 2 atom% or more, provided that the concentration of titanium in the surface-coated particle is 100 atom%, and the atomic ratio "(b)/(a)" of the element (b) to the element (a) is more than 0.5.

The water-dispersibility of the surface-coated particle may be evaluated by measuring the zeta potential. The zeta potential normally refers to the surface potential (amount of surface charge) of a particle in a solution. When the absolute value of the zeta potential is large, the surface of the particle is highly charged in the solution, and interparticle repulsion increases (i.e., the surface-coated particle exhibits excellent water-dispersibility). When the absolute value of the zeta potential is small, aggregation of the surface-coated particles occurs.

It is preferable that the surface-coated particle have an isoelectric point of pH 4 or less, and more preferably pH 3 or less, the isoelectric point being a point at which the zeta potential is 0. Since an electrostatic repulsion force disappears around the isoelectric point, the surface-coated particle forms an aggregation system. When the isoelectric point is pH 4 or less, the surface-coated particle forms a dispersion system over a wide pH range, and exhibits excellent water-dispersibility.

The zeta potential of the surface-coated particle is normally measured at a sample concentration of 0.01 to 20 mg/ml. Note that the sample concentration is determined taking account of the measurement device and the measurement target particle.

It is considered that an oxide of the element (a) (phosphorus or sulfur) causes the isoelectric point of the surface-coated particle to shift toward the acidic side as compared with the titanium dioxide particle, and contributes to dispersion stability over a wide pH range (particularly around pH 7), and uniformity of the coating film.

It is preferable that the surface-coated particle have a negative zeta potential at pH 6 to 10 from the viewpoint of utility. The surface-coated particle exhibits excellent water-dispersibility when the absolute value of the zeta potential is large. It is preferable that the absolute value of the zeta potential of the surface-coated particle at pH 6 to 10 be 5 mV or more from the viewpoint of water-dispersibility.

The stability of the particle shape of the surface-coated particle may be evaluated by subjecting the surface-coated particle to X-ray diffraction spectroscopy (XRD), and calculating the particle growth rate from the difference between the average primary particle size before calcining and the average primary particle size after calcining. When the particle growth rate is low, it is determined that aggregation of the surface-coated particles due to drying and/or calcining is suppressed. An aqueous dispersion that is prepared using the surface-coated particle having a low particle growth rate after drying and/or calcining exhibits better water-dispersibility. It is preferable that the particle growth rate be 20% or less from the viewpoint of water-dispersibility. The particle growth rate is more preferably 10% or less.

The details of the principle whereby the surface-coated particle according to the first embodiment exhibits excellent water-dispersibility are not clear. It is conjectured that the surface-coated particle according to the first embodiment exhibits excellent water-dispersibility since the coating film that covers the surface of the titanium dioxide primary particle decreases the isoelectric point, and suppresses the surface reactivity of titanium dioxide, and interparticle aggregation in a dispersion medium occurs to only a small extent.

An aqueous dispersion that is prepared by dispersing the surface-coated particle according to the first embodiment in water, an organic solvent, or the like, and adjusting the pH of the dispersion to a given value, forms a slurry, and includes free water, even when the aqueous dispersion includes titanium dioxide at a high concentration. The aqueous dispersion suppresses interparticle aggregation, exhibits fluidity, and has low viscosity. When using a related-art technique, such an aqueous dispersion does not form a slurry, or gels. The amount of large particles increases due to interparticle aggregation, and hard-caking easily occurs.

### <Method for producing surface-coated particle>

The surface-coated particle according to the first embodiment may be produced by a method that includes mixing the titanium dioxide particle with a compound that includes the element (a) to obtain a mixture (step 1), mixing the mixture with a solution that includes an acidic metal salt that includes the element (b) (step 2), and subjecting the resulting mixture to drying or calcining, or both, to obtain the surface-coated particle (step 3).

Each step is sequentially described below.

### (Step 1)

In the step 1, the titanium dioxide particle is mixed with the compound that includes the element (a) to obtain a mixture.

The compound that includes the element (a) is preferably a phosphoric acid compound or a sulfuric acid compound, and more preferably a condensed phosphate or a sulfate. Note that two or more compounds that include the element (a) may be used in combination.

The term "condensed phosphate" used herein refers to a salt of an acid obtained by dehydration and condensation of orthophosphoric acid (H₃PO₄). Various compounds may be used as the condensed phosphate. Example of the condensed phosphate include alkali metal salts and ammonium salts of pyrophosphoric acid, tripolyphosphoric acid, tetrapolyphosphoric acid, trimetaphosphoric acid, tetrametaphosphoric acid, hexametaphosphoric acid, and the like. Examples of the alkali metal include sodium and potassium. Specific examples of the condensed phosphate include, but are not limited to, sodium pyrophosphate, potassium tripolyphosphate, sodium hexametaphosphate, and the like. Note that various other condensed phosphates may also be used. It is preferable to use a salt of pyrophosphoric acid, polyphosphoric acid, or hexametaphosphoric acid, and more preferably sodium hexametaphosphate. Note that these condensed phosphates may be used in combination.

Various compounds may be used as the sulfate. Examples of the sulfate include, but are not limited to, ammonium sulfate, sodium sulfate, potassium sulfate, cesium sulfate, and the like. Note that various other sulfates may also be used. Among these, ammonium sulfate and sodium sulfate are preferable. Note that these sulfates may be used in combination.

The compound that includes the element (a) is mixed so that the concentration of the element (a) in the surface-coated particle is 2 atom% or more, provided that the concentration of titanium in the surface-coated particle is 100 atom%. This makes it possible to obtain a surface-coated particle that exhibits excellent water-dispersibility.

It is preferable to perform the step 1 using a wet method (i.e., perform the step 1 in the presence of a solvent such as water).

For example, the titanium dioxide particle and the compound that includes the element (a) are mixed in an aqueous medium with stirring. Examples of the aqueous medium include water and/or a solvent that dissolves water partially in an arbitrary ratio, or dissolves water completely. The water is not particularly limited. Distilled water, ion-exchanged water, tap water, industrial water, or the like may be used. It is preferable to use distilled water or ion-exchanged water.

The solvent that dissolves water partially in an arbitrary ratio, or dissolves water completely, is not particularly limited as long as the solvent is an organic solvent that exhibits affinity to water. Examples of the solvent include methanol, ethanol, propyl alcohol, isopropyl alcohol, acetone, acetonitrile, dimethyl sulfoxide, dimethylformamide, dimethylimidazolidinone, ethylene glycol, diethylene glycol, tetraethylene glycol, N,N-dimethylacetamide, N-methyl-2-pyrrolidone, diethyl ether, tetrahydrofuran, dioxane, methyl ethyl ketone, cyclohexanone, cyclopentanone, 2-methoxyethanol (methyl cellosolve), 2-ethoxyethanol (ethyl cellosolve), ethyl acetate, and the like. Among these, methanol, ethanol, propyl alcohol, isopropyl alcohol, acetonitrile, dimethyl sulfoxide, dimethylformamide, acetone, tetrahydrofuran, dioxane, diethylene glycol, diethyl ether, and ethylene glycol are preferable due to high affinity to water.

The pH of the mixture is not particularly limited, but is preferably 0.5 to 13, and more preferably 1.0 to 12.5.

### (Step 2)

In the step 2, the mixture obtained by the step 1 is mixed with the solution that includes the acidic metal salt that includes the element (b). Specifically, the solution that includes the acidic metal salt that includes the element (b) is mixed into the aqueous slurry solution that includes the titanium dioxide particle and the compound that includes the element (a). After adjusting the pH of the mixture, the mixture is filtered to obtain a solid.

Examples of the acidic metal salt that includes the element (b) include a metal halide, a metal nitrate, a metal sulfate, and the like. The term "metal halide" used herein includes a metal oxyhalide.

Examples of the metal halide include a zirconium halide, a cerium halide, a zinc halide, a scandium halide, a yttrium halide, a hafnium halide, a magnesium halide, a barium halide, and hydrates thereof.

A zirconium oxyhalide is preferable as the metal oxyhalide. Zirconium oxychloride that exhibits high solubility with respect to water is particularly preferable.

Examples of the metal nitrate include zirconium nitrate, cerium nitrate, zinc nitrate, scandium nitrate, yttrium nitrate, hafnium nitrate, magnesium nitrate, barium nitrate, and hydrates thereof.

Examples of the metal sulfate include zirconium sulfate, cerium sulfate, zinc sulfate, scandium sulfate, yttrium sulfate, hafnium sulfate, magnesium sulfate, barium sulfate, and hydrates thereof.

A surface-coated particle that exhibits excellent water-dispersibility is obtained by mixing a solution prepared by dissolving the acidic metal salt that includes the element (b) in a solvent such as water so that the atomic ratio "(b)/(a)" falls within the above range.

When the solution that includes the acidic metal salt that includes the element (b) is mixed into the aqueous slurry solution that includes the titanium dioxide particle and the compound that includes the element (a), the resulting mixture has a pH within a strongly acidic region. It is preferable to adjust the pH of the mixture to 1.5 to 5 by adding a base such as sodium hydroxide.

### (Step 3)

In the step 3, the solid obtained by the step 2 is subjected to drying or calcining, or both, to obtain the surface-coated particle. In the first embodiment, the solid may be subjected to both drying and calcining, or may be subjected to either drying or calcining.

### [Drying]

In the first embodiment, the solid obtained by the step 2 may be subjected directly to drying to obtain a powder. The drying (heating) temperature is preferably room temperature to 300°C, and more preferably room temperature to 200°C.

When drying the solid at a temperature equal to or less than room temperature, a solvent that is azeotropic with respect to water, such methanol, ethanol, propanol, or isopropanol may be added to the solid, and the mixture may be dried under pressure, dried under vacuum, or freeze-dried.

When the dried powder is ground or classified by sieving, it may be unnecessary to grind or classify the powder after calcining, or it may be possible to grind or classify the powder after calcining within a shorter time.

Alternatively, the solid may be dried and disintegrated using a method that heats the solid at a given temperature, removes water or a solvent, and grinds or classifies the residue (solid), a method that removes water or a solvent at a low temperature, heats the residue at a given temperature, and grinds or classifies the resulting solid (e.g., freeze-drying method), a method that adds a poor solvent such as methanol to the solid to effect aggregation, followed by filtration and drying, or a method that sprays particles having a particle size of 10 micrometers or less using a spray dryer, and volatilizes the solvent to obtain a powder, for example.

### [Calcining]

In the first embodiment, the solid obtained by the step 2, or the powder obtained by the drying step, may be calcined. The calcining temperature may be 300 to 1000°C, for example. The calcining temperature is preferably 650°C or less, and more preferably 600°C or less. The solid or the powder may be calcined at a constant temperature, or may be calcined while gradually increasing the temperature from room temperature. The calcining time may be determined taking account of the calcining temperature, but is preferably 1 to 24 hours. The solid or the powder may be calcined in the air, or may be calcined in an inert gas (e.g., nitrogen or argon). The solid or the powder may be calcined under reduced pressure or vacuum.

### (Preparation of aqueous dispersion)

The surface-coated particles obtained by the step 3 may optionally be wet-ground (crushed) to have the desired particle size, and dispersed in water.

A grinder/disperser such as a bead mill, a jet mill, a ball mill, a sand mill, an attritor, a roll mill, an agitator mill, a Henschel mixer, a colloid mill, an ultrasonic homogenizer, or an Angmil may be used to prepare an aqueous dispersion that includes the surface-coated particles having the desired particle size.

The surface-coated particles may be preliminarily ground using a mortar before introducing the surface-coated particles into the grinder/disperser. A pre-mixing mixer may also be used. The aqueous dispersion may be subjected directly to the subsequent step, or may be subjected to centrifugation, filtration under pressure, filtration under reduced pressure, or the like in order to remove a small amount of large particles.

The surface-coated particles are preferably added in a ratio of 1 to 60 wt%, and more preferably 3 to 50 wt%, based on the total amount of the aqueous dispersion. An aqueous dispersion that includes the surface-coated particles in a ratio within the above range includes only a small amount of large particles, and ensures that the pigment particles exhibit excellent water-dispersibility and hard-caking resistance.

It is preferable to adjust the pH of the aqueous dispersion to 3 to 10 by adding an acid such as hydrochloric acid or a base such as sodium hydroxide, as required.

For example, the grinding/dispersion process may be performed in the presence of an additive such as an anionic surfactant, a cationic surfactant, an amphoteric surfactant, a nonionic surfactant, a polymer dispersant, an antifoaming agent, a pH-adjusting agent, or a preservative. Note that it is not indispensable to add a surfactant or a dispersant in order to achieve dispersion stability.

### <Use (application)>

Since the surface-coated particle according to the first embodiment exhibits excellent dispersibility in a polar dispersion medium such as water, it is possible to prepare a dispersion slurry that includes titanium dioxide at a high concentration by utilizing the surface-coated particle according to the first embodiment. This makes it possible to significantly reduce the transportation cost as compared with a known titanium dioxide aqueous dispersion, and easily increase the content range when applying the aqueous dispersion as a coating material, a cosmetic preparation, or a resin formed article.

Since the resulting aqueous dispersion suppresses interparticle aggregation, includes only a small amount of large particles, and exhibits excellent hard-caking resistance, the aqueous dispersion allows easy handling. Since the surface-coated particle according to the first embodiment rarely aggregates, and exhibits excellent powder fluidity, the surface-coated particle according to the first embodiment exhibits excellent dispersibility in a resin powder that includes a polar group.

Therefore, the surface-coated particle according to the first embodiment may be incorporated in a coating material, a cosmetic preparation, fibers, a film, a formed article, and the like. When using the surface-coated particle according to the first embodiment for a sunscreen cosmetic preparation, the surface-coated particle according to the first embodiment may be mixed with an oil component, a moisturizer, a surfactant, a pigment, an essence, a preservative, water, an alcohol, a thickener, and the like, and the resulting mixture may be used as a lotion, a cream, a paste, a stick-like preparation, a milky lotion, or the like. When using the surface-coated particle according to the first embodiment for a UV-blocking coating material, the surface-coated particle according to the first embodiment is mixed with a polyvinyl alcohol resin, a vinyl chloride-vinyl acetate resin, an acrylic resin, an epoxy resin, a urethane resin, an alkyd resin, a polyester resin, an ethylene-vinyl acetate copolymer, an acrylic-styrene copolymer, a cellulose resin, a phenol resin, an amino resin, or the like, and the mixture is dispersed in an aqueous solvent.

### Second embodiment

A particle according to the second embodiment includes a titanium dioxide particle, and at least one element selected from elements (excluding titanium) respectively belonging to Groups 2 to 12 in the periodic table, the ratio (A_{BET(H2O)}/A_{BET(N2)}) of the specific surface area (A_{BET(H2O)}) of the particle determined using a water vapor adsorption method to the specific surface area (A_{BET(N2)}) of the particle determined using a nitrogen adsorption method being 1.0 or more.

In Patent Literature 1, the aqueous dispersibility of titanium dioxide particles is improved by dispersing the titanium dioxide particles in the presence of an organic polymer dispersant. However, an increase in concentration and a decrease in viscosity cannot be achieved by the method disclosed in Patent Literature 1.

In Patent Literatures 2 and 3, whiteness and light scattering efficiency are achieved by surface coating. However, Patent Literatures 2 and 3 are silent about an improvement in water-dispersibility of titanium dioxide particles.

Patent Literature 6 is also silent about an improvement in water-dispersibility of titanium dioxide particles.

The second embodiment solves the above problem, and relates to a particle that exhibits excellent water-dispersibility, and an aqueous dispersion that includes the particle, and has low viscosity.

The particle according to the second embodiment exhibits excellent water-dispersibility. An aqueous dispersion that exhibits excellent hard-caking resistance, and includes only a small amount of large particles, can be obtained by dispersing the particle according to the second embodiment in water.

The particle according to the second embodiment and an aqueous dispersion that includes the particle are sequentially described below. Note that the expression "A to B" used herein in connection with a numerical range means "A or more and B or less (equal to or more than A and equal to or less than B)" unless otherwise specified.

### <Particle>

The particle according to the second embodiment includes a titanium dioxide particle, and at least one element selected from elements (excluding titanium) respectively belonging to Groups 2 to 12 in the periodic table, the ratio (A_{BET(H2O)}/A_{BET(N2)}) of the specific surface area (A_{BET(H2O)}) of the particle determined using a water vapor adsorption method to the specific surface area (A_{BET(N2)}) of the particle determined using a nitrogen adsorption method being 1.0 or more, preferably 1.2 or more, and more preferably 2.0 or more.

The porous properties and the surface properties of the particle according to the second embodiment may be determined using the nitrogen adsorption method. The specific surface area of the particle according to the second embodiment may be determined (calculated) using the Brunauer-Emmett-Teller (BET) method from the nitrogen adsorption-desorption measurement results.

The specific surface area (A_{BET(N2)}) of the particle determined using the nitrogen adsorption method is not particularly limited, but is preferably 1 to 250 m²/g, and more preferably 2 to 200 m²/g.

The specific surface area of the particle may be determined by utilizing a water molecule as adsorption species. The water vapor adsorption-desorption measurement is normally performed at an adsorption temperature of 25°C and a relative humidity of 80 to 100%.

The ratio (A_{BET(H2O)}/A_{BET(N2)}) of the specific surface area (A_{BET(H2O)}) to the specific surface area (A_{BET(N2)}) represents the water absorption of the particle per unit surface area. The surface of the particle has high hydrophilicity when the ratio (A_{BET(H2O)}/A_{BET(N2)}) is large.

Since the ratio (A_{BET(H2O)}/A_{BET(N2)}) is within the above range, the particle according to the second embodiment exhibits high surface hydrophilicity and excellent water-dispersibility. The titanium dioxide particles disclosed in Patent Literature 1 do not satisfy the above numerical range.

It has been known to provide titanium dioxide with water-dispersibility by treating the surface of titanium dioxide with a metal oxide (or compound) of Si, Al, or the like so that the surface of titanium dioxide exhibits hydrophilicity. However, even if the surface of titanium dioxide is provided with hydrophilic groups, the degree of dispersion in water differs to a large extent depending on the amount and the state of the hydrophilic groups. Specifically, when the amount of the hydrophilic groups present on the surface of the particles is small, the particles aggregate when dispersed in water, and an increase in viscosity and precipitation occur, whereby hard-caking occurs.

When the amount of the hydrophilic groups present on the surface of the particles is large, interparticle hydrophobic bonding and aggregation rarely occur (i.e., the particles exhibit excellent water-dispersibility). It is possible to obtain a titanium dioxide particle that exhibits higher dispersibility by determining the state of a hydrophilic group present on the particle, and treating the surface of the particle so that a large amount of hydrophilic groups are present over the surface of the particle.

The surface state of the particle can be estimated by the ratio (A_{BET(H2O)}/A_{BET(N2)}) of the specific surface area (A_{BET(H2O)}) of the particle determined using the water vapor adsorption method to the specific surface area (A_{BET(N2)}) of the particle determined using the nitrogen adsorption method.

The nitrogen adsorption method converts the amount of nitrogen molecules that adhere to the surface of the particle into the specific surface area. The nitrogen molecules physically adhere to the surface of the particle irrespective of the chemical properties (i.e., hydrophilicity, hydrophobicity, polarity, or nonpolarity) of the surface of the particle. On the other hand, the water vapor adsorption method converts the amount of water molecules that adhere to the surface of the particle into the specific surface area. Since the water molecules adhere only to the hydrophilic part of the surface of the particle, and water in an association state can be adsorbed on a part where the density of hydrophilic groups is high (or hydrophilic groups with higher polarity are present), water can be adsorbed in an area equal to or larger than the actual surface area.

When it is considered that the specific surface area measured using the nitrogen adsorption method is the actual specific surface area, and the specific surface area measured using the water vapor adsorption method is the area where the hydrophilic groups are present (i.e., the amount of water that can be held by the hydrophilic groups), it is possible to estimate the state of the hydrophilic groups present on the surface of the particle. Specifically, the ratio (A_{BET(H2O)}/A_{BET(N2)}) is close to 1 when the ratio of the area of the surface of the particle that is covered with the hydrophilic groups is high, and exceeds 1.0 as hydrophilicity increases (i.e., a larger amount of water can be held).

The inventors of the invention found that a particle for which the ratio (A_{BET(H2O)}/A_{BET(N2)}) is 1.0 or more exhibits excellent water-dispersibility and excellent hard-caking resistance, and ensures that it is possible to obtain an aqueous dispersion that includes only small amount of large particles. This finding has led to the completion of the particle according to the second embodiment.

If particles are coated with an oxide of Si or Al, or a film of a hydroxide thereof, gelation may occur due to the reactivity of the coated surface, and an increase in viscosity may occur.

In the second embodiment, the titanium dioxide particle is covered with an oxide, a hydroxide, or a salt of an element other than Si and Al, i.e., an oxide, a hydroxide, and/or a salt of at least one element selected from elements (excluding titanium) respectively belonging to Groups 2 to 12 in the periodic table (hereinafter appropriately referred to as "element (X)"). This makes it possible to obtain a slurry that has a high concentration and low viscosity.

It is preferable that the particle according to the second embodiment includes the titanium dioxide particle, and a coating film that covers the titanium dioxide particle. It is preferable that the titanium dioxide particle be covered with the coating film that includes the element (X). Specifically, it is preferable that the titanium dioxide particle be surface-treated with the element (X). The expression "surface-treated" means that a surface treatment agent adheres to, is supported on, or covers the surface of the titanium dioxide particle.

The coating film may cover the entire surface of the titanium dioxide particle, or may cover at least part of the surface of the titanium dioxide particle. It is preferable that the coating film uniformly and continuously cover the surface of the titanium dioxide particle to form a core-shell structure with the titanium dioxide particle, since excellent water-dispersibility can be obtained.

The state of the coating film may be observed using a field emission transmission electron microscope (FE-TEM).

In the second embodiment, it is preferable to uniformly form the coating film having a thickness equal to about 1 to 30% of the primary particle size on the surface of the titanium dioxide particle.

A preferable thickness differs depending on the desired function, and the particle size and the crystal form of titanium dioxide. A thin film is normally preferable in order to prevent a situation in which the functions (e.g., UV-blocking effect, infrared-blocking effect, catalytic (photocatalytic) function, and optical properties) of the titanium dioxide particle are impaired, and a thick film is preferable when it is desired to suppress the functions of the titanium dioxide particle. It is considered that it is possible to obtain such a surface-coated particle using the production method according to the second embodiment.

### (Titanium dioxide particle)

The titanium dioxide particle used in connection with the second embodiment may be produced using various methods. Commercially available titanium dioxide may also be used.

When producing the titanium dioxide particle, the titanium dioxide particle mentioned above in connection with the first embodiment may also be used.

### (At least one element selected from elements (excluding titanium) respectively belonging to Groups 2 to 12 in the periodic table (element (X)))

Examples of the elements belonging to Group 2 that may be used as the element (X) include Be, Mg, Ca, Sr, Ba, and the like. Examples of the elements belonging to Group 3 that may be used as the element (X) include Sc, Y, lanthanoid, and the like. Examples of the elements belonging to Group 4 that may be used as the element (X) include Zr, Hf, and the like. Examples of the elements belonging to Group 5 that may be used as the element (X) include V, Nb, Ta, and the like. Examples of the elements belonging to Group 6 that may be used as the element (X) include Cr, Mo, W, and the like. Examples of the elements belonging to Group 7 that may be used as the element (X) include Mn, Tc, Re, and the like. Examples of the elements belonging to Group 8 that may be used as the element (X) include Fe, Ru, Os, and the like. Examples of the elements belonging to Group 9 that may be used as the element (X) include Co, Rh, Ir, and the like. Examples of the elements belonging to Group 10 that may be used as the element (X) include Ni, Pd, Pt, and the like. Examples of the elements belonging to Group 11 that may be used as the element (X) include Cu, Ag, Au, and the like. Examples of the elements belonging to Group 12 that may be used as the element (X) include Zn, Cd, Hg, and the like. Among these, zirconium, cerium, zinc, scandium, yttrium, hafnium, magnesium, and barium are preferable since excellent water-dispersibility can be obtained. Zirconium, yttrium, and hafnium (i.e., transition elements having similar electronegativity) are more preferable, and zirconium is particularly preferable.

A compound (e.g., acidic metal salt) that includes the element (X) is used as a raw material for producing the particle according to the second embodiment. Examples of the compound include a metal halide, a metal nitrate, a metal sulfate, and the like. The term "metal halide" used herein includes a metal oxyhalide.

Examples of the metal halide include a zirconium halide, a cerium halide, a zinc halide, a scandium halide, a yttrium halide, a hafnium halide, a magnesium halide, a barium halide, and hydrates thereof.

A zirconium oxyhalide is preferable as the metal oxyhalide. Zirconium oxychloride that exhibits high solubility with respect to water is particularly preferable.

Examples of the metal nitrate include zirconium nitrate, cerium nitrate, zinc nitrate, scandium nitrate, yttrium nitrate, hafnium nitrate, magnesium nitrate, barium nitrate, and hydrates thereof.

Examples of the metal sulfate include zirconium sulfate, cerium sulfate, zinc sulfate, scandium sulfate, yttrium sulfate, hafnium sulfate, magnesium sulfate, barium sulfate, and hydrates thereof.

The distribution of the element (X) in the particle can be observed by transmission electron microscopy (TEM)-electron energy-loss spectroscopy (EELS) (TEM-EELS). According to TEM-EELS line analysis, the element (X) is detected on the outer side of titanium (Ti), and the (X)/Ti ratio is higher on the outer side of the particle. Therefore, it is considered that the element (X) is present on the surface of the particle.

The hydrophilicity of the surface of the particle according to the second embodiment is improved by subjecting the entire surface of the particle to the surface treatment, and increasing the water absorption of the particle per unit surface area. Therefore, the particle according to the second embodiment exhibits excellent water-dispersibility. Various attempts have made to increase the water absorption of a particle.

For example, excellent water-dispersibility can be obtained by introducing a polar group into the surface of the titanium dioxide particle. The polar group is not particularly limited. Examples of an inorganic polar group include a polar group that includes phosphorus, sulfur, or nitrogen (particularly a phosphoric acid group). Examples of an organic substance include a metal salt, a halide, an ammonium salt, a derivative thereof, and the like of a carboxylic acid such as fumaric acid, maleic acid, oxalic acid, tetracarboxylic acid, succinic acid, glutaric acid, adipic acid, isophthalic acid, terephthalic acid, acetic anhydride, benzoic anhydride, acrylic acid, and polyacrylic acid, an amide such as acetamide, benzamide, glycine, and propionamide, and an ester such as methyl acetate, ethyl acetate, n-propyl acetate, butyl acetate, n-pentyl acetate, isobenzyl acetate, phenyl acetate, ethyl formate, ethyl acetate, ethyl propionate, ethyl n-butyrate, ethyl n-valerate, ethyl stearate, ethyl phenylacetate, and ethyl benzoate. Further examples include an inorganic acid ester such as a phosphoric acid ester, a nitric acid ester, and a sulfuric acid ester, and the like.

It is possible to improve the dispersibility of titanium dioxide by introducing these polar groups, and cover the entire surface of the particle with the coating film that includes the element (X).

Examples of a compound that includes the inorganic polar group include a phosphoric acid compound, a sulfuric acid compound, and a nitric acid compound (preferably a condensed phosphate, a sulfate, and a nitrate). These compounds may be used either alone or in combination.

The term "condensed phosphate" used herein refers to a salt of an acid obtained by dehydration and condensation of orthophosphoric acid (H₃PO₄). Various compounds may be used as the condensed phosphate. Example of the condensed phosphate include alkali metal salts of pyrophosphoric acid, tripolyphosphoric acid, tetrapolyphosphoric acid, trimetaphosphoric acid, tetrametaphosphoric acid, hexametaphosphoric acid, and the like. Examples of the alkali metal include sodium and potassium. Specific examples of the condensed phosphate include, but are not limited to, sodium pyrophosphate, potassium tripolyphosphate, sodium hexametaphosphate, and the like. Note that various other condensed phosphates may also be used. It is preferable to use an alkali metal salt or an ammonium salt of pyrophosphoric acid, polyphosphoric acid, or hexametaphosphoric acid, and more preferably sodium hexametaphosphate. Note that these condensed phosphates may be used in combination.

Various compounds may be used as the sulfate. Examples of the sulfate include, but are not limited to, ammonium sulfate, sodium sulfate, potassium sulfate, cesium sulfate, and the like. Note that various other sulfates may also be used. Among these, ammonium sulfate and sodium sulfate are preferable. Note that these sulfates may be used in combination.

Various compounds may be used as the nitrate. Examples of the nitrate include, but are not limited to, ammonium nitrate, sodium nitrate, potassium nitrate, cesium nitrate, and the like. Note that various other nitrates may also be used. Among these, ammonium nitrate and sodium nitrate are preferable. Note that these nitrates may be used in combination.

The concentration of the element (X) in the particle according to the second embodiment is preferably more than 1 atom% and 40 atom% or less, provided that the concentration of titanium in the particle is 100 atom%. The concentration of the element (X) in the particle according to the second embodiment is more preferably 2 to 30 atom%, and still more preferably 5 to 25 atom%, since excellent water-dispersibility can be obtained.

The content of each element in the particle according to the second embodiment can be determined by X-ray fluorescence analysis (XRF).

When using a compound that includes a polar group that includes phosphorus, sulfur, or nitrogen as a raw material for producing the particle according to the second embodiment, the concentration of phosphorus, sulfur, or nitrogen in the particle according to the second embodiment is preferably 2 atom% or more, provided that the concentration of titanium in the particle is 100 atom%. The concentration of phosphorus, sulfur, or nitrogen in the particle according to the second embodiment is more preferably 2 to 30 atom%, and still more preferably 2 to 25 atom%, since excellent water-dispersibility can be obtained.

When using a compound that includes a polar group that includes phosphorus, sulfur, or nitrogen as a raw material for producing the particle according to the second embodiment, the distribution of titanium, the distribution of phosphorus, sulfur, or nitrogen, and the distribution of the element (X) almost agree with each other. An uneven distribution of phosphorus, sulfur, or nitrogen, and the element (X), is not observed.

The compositional distribution of each element included in the particle according to the second embodiment can be determined by energy dispersive X-ray spectrometry (EDS) elemental mapping.

When the compound that includes a polar group that includes phosphorus, sulfur, or nitrogen is sodium hexametaphosphate, and the compound that includes the element (X) is zirconium oxychloride, the main peak is observed at a chemical shift of -19 to -23 ppm when sodium hexametaphosphate is subjected to ³¹P-NMR spectroscopy. A plurality of side bands are also observed (i.e., chemical shift anisotropy is high).

A given amount of a zirconium oxychloride aqueous solution is mixed with a sodium hexametaphosphate aqueous solution. After the addition of a sodium hydroxide aqueous solution, the mixture is washed, filtered, and dried to obtain mixed particles of sodium hexametaphosphate and zirconium oxychloride. When the mixed particles are subjected to ³¹P-NMR spectroscopy, the main peak is observed at a chemical shift of -11 to -15 ppm that differs from position of the main peak of sodium hexametaphosphate. The number of side bands decreases as compared with those of sodium hexametaphosphate.

When the particle according to the second embodiment is subjected to ³¹P-NMR spectroscopy, the main peak is observed at a chemical shift of -11 to -15 ppm that differs from position of the main peak of sodium hexametaphosphate. The number of side bands decreases as compared with those of sodium hexametaphosphate. The spectrum of the particle according to the second embodiment and the spectrum of the mixed particle are almost identical as to the position and the shape of the main peak, and the positions and the number of side bands.

Therefore, it is considered that sodium hexametaphosphate (raw material) does not remain on the surface of the particle according to the second embodiment, and a complex that includes sodium hexametaphosphate and zirconium oxychloride is present on the surface of the particle according to the second embodiment.

When the titanium dioxide particle is mixed with the compound that includes a polar group that includes phosphorus, sulfur, or nitrogen, it is considered that the polar group that includes phosphorus, sulfur, or nitrogen is adsorbed on the surface of the titanium dioxide particle. When the compound that includes the element (X) is mixed with the mixture, it is considered that the polar group that includes phosphorus, sulfur, or nitrogen reacts with the element (X).

It is preferable that the particle according to the second embodiment have a structure in which the titanium dioxide particle is covered with the coating film that includes a complex that includes phosphorus, sulfur, or nitrogen, and the element (X), since further improved water-dispersibility can be obtained.

The water-dispersibility of the particle according to the second embodiment may be evaluated by measuring the zeta potential. The zeta potential normally refers to the surface potential (amount of surface charge) of a particle in a solution. When the absolute value of the zeta potential is large, the surface of the particle is highly charged in the solution, and interparticle repulsion increases (i.e., the particle exhibits excellent water-dispersibility). When the absolute value of the zeta potential is small, interparticle aggregation occurs.

It is preferable that the particle have an isoelectric point of pH 4 or less, and more preferably pH 3 or less, the isoelectric point being a point at which the zeta potential is 0. Since an electrostatic repulsion force disappears around the isoelectric point, the particle forms an aggregation system. When the isoelectric point is pH 4 or less, the particle forms a dispersion system over a wide pH range, and exhibits excellent water-dispersibility.

It is preferable that the particle have a negative zeta potential at pH 6 to 10 from the viewpoint of utility. The particle exhibits excellent water-dispersibility when the absolute value of the zeta potential is large. It is preferable that the absolute value of the zeta potential of the particle at pH 6 to 10 be 5 mV or more from the viewpoint of water-dispersibility.

The stability of the particle shape of the particle may be evaluated by subjecting the particle to X-ray diffraction spectroscopy (XRD), and calculating the particle growth rate from the difference between the average primary particle size before calcining and the average primary particle size after calcining.

The advantageous effects of the particle according to the second embodiment are described below.

Since the particle according to the second embodiment includes the titanium dioxide particle, and at least one element selected from elements (excluding titanium) respectively belonging to Groups 2 to 12 in the periodic table, and the ratio (A_{BET(H2O)}/A_{BET(N2)}) of the specific surface area (A_{BET(H2O)}) of the particle determined using the water vapor adsorption method to the specific surface area (A_{BET(N2)}) of the particle determined using the nitrogen adsorption method is 1.0 or more, the particle according to the second embodiment exhibits excellent water-dispersibility.

The ratio (A_{BET(H2O)}/A_{BET(N2)}) represents the water absorption of the particle per unit surface area. The surface of the particle has high hydrophilicity when the ratio (A_{BET(H2O)}/A_{BET(N2)}) is large. Since the ratio (A_{BET(H2O)}/A_{BET(N2)}) is 1.0 or more, the particle according to the second embodiment exhibits high surface hydrophilicity and excellent water-dispersibility. The titanium dioxide particles disclosed in Patent Literature 1 do not satisfy the above numerical range.

The hydrophilicity of the surface of the particle according to the second embodiment is improved by increasing the water absorption of the particle per unit surface area. Therefore, interparticle aggregation in an aqueous solvent is suppressed, and the particle according to the second embodiment exhibits excellent water-dispersibility.

When the particle according to the second embodiment includes the coating film that covers the entire surface of the titanium dioxide primary particle, the particle according to the second embodiment exhibits further improved water-dispersibility. It is conjectured that interparticle electrostatic repulsion force occurs from all directions by hydrophilizing the entire surface of the particle, and interparticle aggregation is suppressed.

An aqueous dispersion that is prepared by dispersing the particle according to the second embodiment in water, an organic solvent, or the like, and adjusting the pH of the dispersion to a given value, forms a slurry, and includes free water, even when the aqueous dispersion includes titanium dioxide at a high concentration. The aqueous dispersion suppresses interparticle aggregation, exhibits fluidity, and has low viscosity. When using a related-art technique, such an aqueous dispersion does not form a slurry, or gels. The amount of large particles increases due to interparticle aggregation, and hard-caking easily occurs.

### <Method for producing particle>

It is preferable to produce the particle according to the second embodiment by performing the following steps, for example.

Each step is sequentially described below.

### (Step (1))

In the step (1), the titanium dioxide particle is mixed with the compound that includes a polar group that includes phosphorus, sulfur, or nitrogen to obtain a mixture, and the mixture is mixed with a solution that includes the acidic metal salt that includes the element (X).

Specifically, the solution that includes the acidic metal salt that includes the element (X) is mixed into the aqueous slurry solution that includes the titanium dioxide particle and the compound that includes a polar group that includes phosphorus, sulfur, or nitrogen. After adjusting the pH of the mixture, the mixture is filtered to obtain a solid. It is preferable to perform the step (1) using a wet method (i.e., perform the step (1) in the presence of a solvent such as water).

Examples of the aqueous medium include water and/or a solvent that dissolves water partially in an arbitrary ratio, or dissolves water completely. The water is not particularly limited. Distilled water, ion-exchanged water, tap water, industrial water, or the like may be used. It is preferable to use distilled water or ion-exchanged water.

The solvent that dissolves water partially in an arbitrary ratio, or dissolves water completely, is not particularly limited as long as the solvent is an organic solvent that exhibits affinity to water. Examples of the solvent include methanol, ethanol, propyl alcohol, isopropyl alcohol, acetone, acetonitrile, dimethyl sulfoxide, dimethylformamide, dimethylimidazolidinone, ethylene glycol, diethylene glycol, tetraethylene glycol, N,N-dimethylacetamide, N-methyl-2-pyrrolidone, diethyl ether, tetrahydrofuran, dioxane, methyl ethyl ketone, cyclohexanone, cyclopentanone, 2-methoxyethanol (methyl cellosolve), 2-ethoxyethanol (ethyl cellosolve), ethyl acetate, and the like. Among these, methanol, ethanol, propyl alcohol, isopropyl alcohol, acetonitrile, dimethyl sulfoxide, dimethylformamide, acetone, tetrahydrofuran, dioxane, diethylene glycol, diethyl ether, and ethylene glycol are preferable due to high affinity to water.

When the solution that includes the acidic metal salt that includes the element (X) is mixed into the aqueous slurry solution that includes the titanium dioxide particle, the resulting mixture has a pH within a strongly acidic region. It is preferable to adjust the pH of the mixture to 2 to 7 by adding a base such as sodium hydroxide.

The pH of the mixture that includes the titanium dioxide particle and the compound that includes a polar group that includes phosphorus, sulfur, or nitrogen, is not particularly limited, but is preferably 2 to 13, and more preferably 3 to 11.

When the solution that includes the acidic metal salt that includes the element (X) is mixed into the aqueous slurry solution that includes the titanium dioxide particle and the compound that includes a polar group that includes phosphorus, sulfur, or nitrogen, the resulting mixture has a pH within a strongly acidic region. It is preferable to adjust the pH of the mixture to 2 to 7 by adding a base such as sodium hydroxide.

### (Step (2))

In the step (2), the solid obtained by the step (1) is subjected to drying or calcining, or both, to obtain a particle. In the second embodiment, the solid may be subjected to both drying and calcining, or may be subjected to either drying or calcining.

### [Drying]

In the second embodiment, the solid obtained by the step (2) may be dried to obtain a powder. The drying (heating) temperature is preferably room temperature to 300°C, and more preferably 80 to 200°C.

The powder may be obtained using a method that heats the solid at a given temperature, removes water or a solvent, and grinds or classifies the residue (solid), a method that removes water or a solvent at a low temperature, heats the residue at a given temperature, and grinds or classifies the resulting solid (e.g., freeze-drying method), a method that adds a poor solvent such as methanol to the solid to effect aggregation, followed by filtration and drying, or a method that sprays particles having a particle size of 10 micrometers or less using a spray dryer, and volatilizes the solvent to obtain a powder, for example.

### [Calcining]

The solid obtained by the step (2), or the powder obtained by the drying step, may be calcined. The calcining temperature may be 300°C or more and less than 800°C, and preferably less than 650°C, for example. If the calcining temperature is 800°C or more, the hydrophilic groups (e.g., hydroxyl group, phosphoric acid group, sulfuric acid group, or nitric acid group) present on the surface of the particle may be oxidized or sublimed, and the amount of hydrophilic groups present on the surface of the particle may decrease (i.e., part of the surface of the particle may exhibit hydrophobicity).

If the calcining temperature exceeds 650°C, the crystal structure of the titanium dioxide particle may change, and the covering state may change to a large extent.

As a result, the ratio (A_{BET(H2O)}/A_{BET(N2)}) may become less than 1.0, and the particle may not exhibit the desired water-dispersibility.

The solid or the powder may be calcined at a constant temperature, or may be calcined while gradually increasing the temperature from room temperature. The calcining time may be determined taking account of the calcining temperature, but is preferably 1 to 24 hours. The solid or the powder may be calcined in the air, or may be calcined in an inert gas (e.g., nitrogen or argon). The solid or the powder may be calcined under reduced pressure or vacuum.

### (Preparation of aqueous dispersion)

The particles obtained by the step (2) may optionally be wet-ground (crushed) to have the desired particle size, and dispersed in an aqueous medium.

A grinder/disperser such as a bead mill, a jet mill, a ball mill, a sand mill, an attritor, a roll mill, an agitator mill, a Henschel mixer, a colloid mill, an ultrasonic homogenizer, or an Angmil may be used to prepare an aqueous dispersion that includes the particles having the desired particle size.

The particles may be preliminarily ground using a mortar before introducing the particles into the grinder/disperser. A pre-mixing mixer may also be used. The aqueous dispersion may be subjected directly to the subsequent step, or may be subjected to centrifugation, filtration under pressure, filtration under reduced pressure, or the like in order to remove a small amount of large particles.

The particles are preferably added in a ratio of 1 to 60 wt%, and more preferably 3 to 50 wt%, based on the total amount of the aqueous dispersion. An aqueous dispersion that includes the particles in a ratio within the above range includes only a small amount of large particles, and ensures that the particles exhibit excellent water-dispersibility and hard-caking resistance.

It is preferable to adjust the pH of the aqueous dispersion to 3 to 10 by adding a base such as sodium hydroxide, as required.

For example, the grinding/dispersion process may be performed in the presence of an additive such as an anionic surfactant, a cationic surfactant, an amphoteric surfactant, a nonionic surfactant, a polymer dispersant, an antifoaming agent, a pH-adjusting agent, or a preservative. Note that it is not indispensable to add a surfactant or a dispersant in order to achieve dispersion stability.

### <Use (application)>

Since the particle according to the second embodiment exhibits excellent water-dispersibility, it is possible to prepare an aqueous dispersion that includes titanium dioxide at a high concentration by utilizing the particle according to the second embodiment. This makes it possible to significantly reduce the transportation cost as compared with a known titanium dioxide aqueous dispersion, and easily increase the content range when applying the aqueous dispersion as a coating material, a cosmetic preparation, or a resin formed article.

Since the resulting aqueous dispersion suppresses interparticle aggregation, includes only a small amount of large particles, and exhibits excellent hard-caking resistance, the aqueous dispersion allows easy handling. The particle according to the second embodiment exhibits excellent dispersibility in a resin that includes a polar group. Therefore, the particle according to the second embodiment may be incorporated in a coating material, a cosmetic preparation, fibers, a film, a formed article, and the like.

When using the particle according to the second embodiment for an aqueous ink, the particle according to the second embodiment is mixed with a water-soluble organic solvent, a lubricant, a polymer dispersant, a surfactant, a coloring agent, an additional additive, and the like, and the mixture is dispersed in an aqueous solvent.

When using the particle according to the second embodiment for a sunscreen cosmetic preparation, the surface-coated particle according to the first embodiment may be mixed with an oil component, a moisturizer, a surfactant, a pigment, an essence, a preservative, water, an alcohol, a thickener, and the like, and the resulting mixture may be used as a lotion, a cream, a paste, a stick-like preparation, a milky lotion, or the like.

When using the particle according to the second embodiment as a photocatalyst, the particle according to the second embodiment is mixed with an acrylic-styrene copolymer, an acrylic resin, an epoxy resin, an alkyd resin, or the like, and the mixture is dispersed in an aqueous solvent.

When using the particle according to the second embodiment for a UV-blocking agent, the particle according to the second embodiment is mixed with a polyvinyl alcohol resin, a vinyl chloride-vinyl acetate resin, an acrylic resin, an epoxy resin, a urethane resin, an alkyd resin, a polyester resin, an ethylene-vinyl acetate copolymer, an acrylic-styrene copolymer, a cellulose resin, a phenol resin, an amino resin, or the like, and the mixture is dispersed in an aqueous solvent.

### Third embodiment

An aqueous ink pigment according to the third embodiment includes a titanium dioxide particle, and a coating film that covers the titanium dioxide particle, the aqueous ink pigment including: an element (a) that is phosphorus; and an element (b) that is at least one element selected from zirconium, cerium, zinc, scandium, yttrium, hafnium, magnesium, and barium, x, y, and z being present within (including a position on each side) an area enclosed by a quadrangle formed in a ternary diagram (x, y, z), the quadrangle having points A (91, 3, 6), B (84, 2, 14), C (79, 6, 15), and D (79, 9, 12) as vertices, x being the concentration (atom%) of titanium in the aqueous ink pigment, y being the concentration (atom%) of the element (a) in the aqueous ink pigment, and z being the concentration (atom%) of the element (b) in the aqueous ink pigment.

The aqueous ink pigment according to the third embodiment exhibits excellent water-dispersibility. An aqueous ink composition that includes titanium dioxide at a high concentration, exhibits excellent hard-caking resistance, and includes only a small amount of large particles, can be obtained by dispersing the aqueous ink pigment according to the third embodiment in water.

The aqueous ink pigment according to the third embodiment and an aqueous ink composition that includes the aqueous ink pigment are described below. Note that the expression "A to B" used herein in connection with a numerical range means "A or more and B or less (equal to or more than A and equal to or less than B)" unless otherwise specified.

### <Aqueous ink pigment>

The aqueous ink pigment according to the third embodiment includes the titanium dioxide particle, and the coating film that covers the titanium dioxide particle, the aqueous ink pigment including: the element (a) that is phosphorus; and the element (b) that is at least one element selected from zirconium, cerium, zinc, scandium, yttrium, hafnium, magnesium, and barium, x, y, and z being present within (including a position on each side) an area enclosed by a quadrangle formed in a ternary diagram (x, y, z), the quadrangle having points A (91, 3, 6), B (84, 2, 14), C (79, 6, 15), and D (79, 9, 12) as vertices, x being the concentration (atom%) of titanium in the aqueous ink pigment, y being the concentration (atom%) of the element (a) in the aqueous ink pigment, and z being the concentration (atom%) of the element (b) in the aqueous ink pigment.

The aqueous ink pigment according to the third embodiment includes the titanium dioxide particle as a core particle, the titanium dioxide particle being covered (coated) with the coating film.

The particle size of the aqueous ink pigment is not particularly limited. It is preferable that the peak in the volume particle size distribution determined by a dynamic scattering method be 100 to 1000 nm, and more preferably 150 to 500 nm, from the viewpoint of ensuring water-dispersibility, and also ensuring that the aqueous ink pigment can be ejected from an inkjet nozzle in a stable manner without causing clogging.

### (Titanium dioxide particle)

The titanium dioxide particle used in connection with the third embodiment may be produced using various methods.

For example, the titanium dioxide particle mentioned above in connection with the first embodiment may be used.

### (Coating film)

In the third embodiment, the coating film covers the titanium dioxide particle. The coating film may cover the entire surface of the titanium dioxide particle, or may cover at least part of the surface of the titanium dioxide particle.

In the third embodiment, it is preferable that the coating film include the element (a) that is phosphorus, and the element (b) that is at least one element selected from zirconium, cerium, zinc, scandium, yttrium, hafnium, magnesium, and barium. Zirconium, yttrium, and hafnium are preferable as the element (b).

It is preferable that the coating film uniformly and continuously cover the surface of the titanium dioxide particle to form a core-shell structure with the titanium dioxide particle, since excellent water-dispersibility can be obtained.

The state of the coating film may be observed using a field emission transmission electron microscope (FE-TEM).

The distribution of the element (b) in the aqueous ink pigment can be observed by transmission electron microscopy (TEM)-electron energy-loss spectroscopy (EELS) (TEM-EELS). According to TEM-EELS line analysis, the element (b) is detected on the outer side of titanium (Ti), and the (b)/Ti ratio is higher on the outer side of the particle. Therefore, it is considered that the coating film includes the element (b).

The compositional ratio of the aqueous ink pigment can be determined by X-ray fluorescence analysis (XRF).

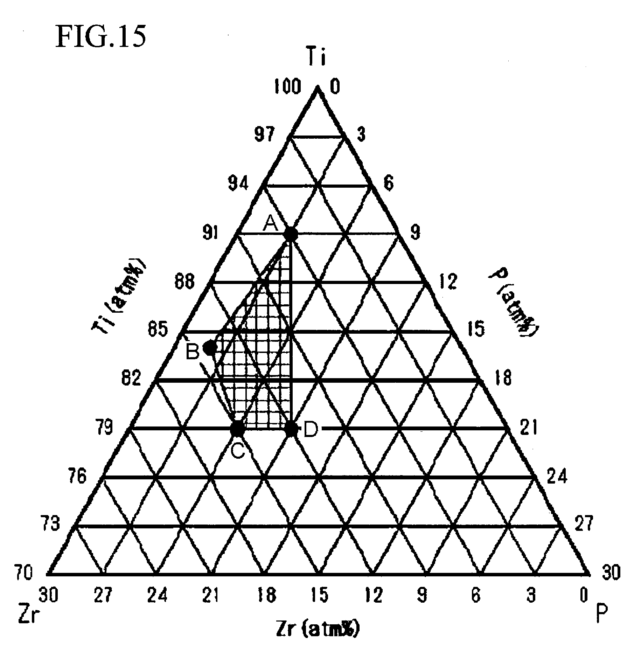

When the compositional ratio of the aqueous ink pigment is determined by XRF, the concentration (atom%) of titanium in the aqueous ink pigment is referred to as x, the concentration (atom%) of the element (a) in the aqueous ink pigment is referred to as y, and the concentration (atom%) of the element (b) in the aqueous ink pigment is referred to as z, x, y, and z are present within (including a position on each side) an area enclosed by a quadrangle formed in the ternary diagram illustrated in FIG. 15, the quadrangle having points A (x, y, z)=(91, 3, 6), B (x, y, z)=(84, 2, 14), C (x, y, z)=(79, 6, 15), and D (x, y, z)=(79, 9, 12) as vertices. It is preferable that x, y, and z be present within (including a position on each side) an area enclosed by a quadrangle having points A (x, y, z)=(91, 3, 6), E (x, y, z)=(84, 3, 13), F (x, y, z)=(79, 7, 14), and D (x, y, z)=(79, 9, 12) as vertices, from the viewpoint of water-dispersibility.

The compositional distribution of the aqueous ink pigment can also be determined by energy dispersive X-ray spectrometry (EDS) elemental mapping. When the aqueous ink pigment is subjected to EDS elemental mapping, the distribution of titanium, the distribution of the element (a), and the distribution of the element (b) almost agree with each other. An uneven distribution of the element (a) and the element (b) is not observed.

The water-dispersibility of the aqueous ink pigment may be evaluated by measuring the zeta potential. The zeta potential normally refers to the surface potential (amount of surface charge) of a particle in a solution. When the absolute value of the zeta potential is large, the surface of the particle is highly charged in the solution, and interparticle repulsion increases (i.e., the aqueous ink pigment exhibits excellent water-dispersibility). When the absolute value of the zeta potential is small, aggregation of the aqueous ink pigment occurs.

It is preferable that the aqueous ink pigment have an isoelectric point of pH 4 or less, and more preferably pH 3 or less, the isoelectric point being a point at which the zeta potential is 0. Since an electrostatic repulsion force disappears around the isoelectric point, the particle tends to form an aggregation system. The isoelectric point of the titanium dioxide particle that is not coated (covered) is pH 5 to 8. Since aggregation occurs at about a neutral pH, the titanium dioxide particle can be dispersed only in the alkaline region. When the isoelectric point is pH 4 or less, the aqueous ink pigment does not aggregate over a wide pH range, and exhibits excellent water-dispersibility.

The zeta potential of the aqueous ink pigment is normally measured at a sample concentration of 1 to 10 mg/ml.

It is considered that an oxide of the element (a) (phosphorus) causes the isoelectric point of the aqueous ink pigment to shift toward the acidic side as compared with the titanium dioxide particle, and contributes to dispersion stability over a wide pH range (particularly around pH 7).

It is preferable that the aqueous ink pigment have a negative zeta potential at pH 6 to 10 from the viewpoint of utility. The aqueous ink pigment exhibits excellent water-dispersibility when the absolute value of the zeta potential is large. It is preferable that the absolute value of the zeta potential of the aqueous ink pigment at pH 6 to 10 be 10 mV or more from the viewpoint of water-dispersibility.

The covering state of the particle may be evaluated by subjecting titanium dioxide included in the aqueous ink pigment to X-ray diffraction spectroscopy (XRD), and calculating the particle growth rate from the difference between the average primary particle size before calcining and the average primary particle size after calcining. When the particle growth rate is low, it is determined that the coating ratio of the surface of the particle is high, and aggregation of titanium dioxide is suppressed. An aqueous ink composition that is prepared using an aqueous ink pigment having a low particle growth rate exhibits better water-dispersibility. It is preferable that the particle growth rate be 20% or less from the viewpoint of water-dispersibility. The particle growth rate is more preferably 10% or less.

The details of the principle whereby the aqueous ink pigment according to the third embodiment exhibits excellent water-dispersibility are not clear. It is conjectured that the aqueous ink pigment according to the third embodiment exhibits excellent water-dispersibility since the coating film that covers the surface of the titanium dioxide primary particle decreases the isoelectric point, and suppresses the surface reactivity (e.g., gelation) of titanium dioxide, and interparticle aggregation in a dispersion medium occurs to only a small extent.

An aqueous ink composition that is prepared by dispersing the aqueous ink pigment according to the third embodiment in water, an organic solvent, or the like, and adjusting the pH of the dispersion to a given value, forms a slurry, and includes free water, even when the aqueous ink composition includes titanium dioxide at a high concentration. The aqueous ink composition suppresses interparticle aggregation, exhibits fluidity, and has low viscosity. Gelation occurs when water-dispersibility is poor. The amount of large particles increases due to interparticle aggregation, and hard-caking easily occurs. Specifically, a dispersion that includes titanium dioxide at a high concentration cannot be obtained.

### <Method for producing aqueous ink pigment>

The aqueous ink pigment according to the third embodiment may be produced by a method that includes mixing the titanium dioxide particle with a compound that includes the element (a) to obtain a mixture (step 1), mixing the mixture with a solution that includes an acidic metal salt that includes the element (b) that is at least one element selected from zirconium, cerium, zinc, scandium, yttrium, hafnium, magnesium, and barium (step 2), and subjecting the resulting mixture to drying or calcining, or both, to obtain the aqueous ink pigment (step 3).

The compound that includes the element (a), and the solution that includes the acidic metal salt that includes the element (b) are used so that the concentration of titanium, the concentration of the element (a), and the concentration of the element (b) in the aqueous ink pigment are within the above ranges.

Each step is sequentially described below.

### (Step 1)

In the step 1, the titanium dioxide particle is mixed with the compound that includes the element (a) to obtain a mixture.

In the third embodiment, the compound that includes the element (a) is preferably a phosphoric acid compound, and more preferably a condensed phosphate. Note that two or more compounds that include the element (a) may be used in combination.

The term "condensed phosphate" used herein refers to a salt of an acid obtained by dehydration and condensation of orthophosphoric acid (H₃PO₄). Various compounds may be used as the condensed phosphate. Example of the condensed phosphate include alkali metal salts of pyrophosphoric acid, tripolyphosphoric acid, tetrapolyphosphoric acid, trimetaphosphoric acid, tetrametaphosphoric acid, hexametaphosphoric acid, and the like. Examples of the alkali metal include sodium and potassium. Specific examples of the condensed phosphate include, but are not limited to, sodium pyrophosphate, potassium tripolyphosphate, sodium hexametaphosphate, and the like. Note that various other condensed phosphates may also be used. It is preferable to use an alkali metal salt or an ammonium salt of pyrophosphoric acid, polyphosphoric acid, or hexametaphosphoric acid, and more preferably sodium hexametaphosphate. Note that these condensed phosphates may be used in combination.

It is preferable to perform the step 1 using a wet method (i.e., perform the step 1 in the presence of a solvent such as water).

For example, the titanium dioxide particle and the compound that includes the element (a) are mixed in an aqueous medium with stirring. Examples of the aqueous medium include water and/or a solvent that dissolves water partially in an arbitrary ratio, or dissolves water completely. The water is not particularly limited. Distilled water, ion-exchanged water, tap water, industrial water, or the like may be used. It is preferable to use distilled water or ion-exchanged water.

The solvent that dissolves water partially in an arbitrary ratio, or dissolves water completely, is not particularly limited as long as the solvent is an organic solvent that exhibits affinity to water. Examples of the solvent include methanol, ethanol, propyl alcohol, isopropyl alcohol, acetone, acetonitrile, dimethyl sulfoxide, dimethylformamide, dimethylimidazolidinone, ethylene glycol, diethylene glycol, tetraethylene glycol, N,N-dimethylacetamide, N-methyl-2-pyrrolidone, diethyl ether, tetrahydrofuran, dioxane, methyl ethyl ketone, cyclohexanone, cyclopentanone, 2-methoxyethanol (methyl cellosolve), 2-ethoxyethanol (ethyl cellosolve), ethyl acetate, polyglycerol, and the like. Among these, methanol, ethanol, propyl alcohol, isopropyl alcohol, acetonitrile, dimethyl sulfoxide, dimethylformamide, acetone, tetrahydrofuran, dioxane, diethylene glycol, diethyl ether, ethylene glycol, and polyglycerol are preferable due to high affinity to water.

The pH of the mixture is not particularly limited, but is preferably 0.5 to 13, and more preferably 2 to 11.

### (Step 2)

In the step 2, the mixture obtained by the step 1 is mixed with the solution that includes the acidic metal salt that includes the element (b). Specifically, the solution that includes the acidic metal salt that includes the element (b) is mixed into the aqueous slurry solution that includes the titanium dioxide particle and the compound that includes the element (a). After adjusting the pH of the mixture, the mixture is filtered to obtain a solid.

In the third embodiment, the acidic metal salt that includes the element (b) may be used as the compound that includes the element (b). Examples of the acidic metal salt include a metal halide, a metal nitrate, a metal sulfate, and the like. The term "metal halide" used herein includes a metal oxyhalide.

Examples of the metal halide include a zirconium halide, a cerium halide, a zinc halide, a scandium halide, a yttrium halide, a hafnium halide, a magnesium halide, a barium halide, and hydrates thereof.

A zirconium oxyhalide is preferable as the metal oxyhalide. Examples of the zirconium oxyhalide include zirconium oxychloride and zirconium tetrachloride. In particular, zirconium oxychloride that exhibits high solubility with respect to water is preferable.

Examples of the metal nitrate include zirconium nitrate, cerium nitrate, zinc nitrate, scandium nitrate, yttrium nitrate, hafnium nitrate, magnesium nitrate, barium nitrate, and hydrates thereof.

Examples of the metal sulfate include zirconium sulfate, cerium sulfate, zinc sulfate, scandium sulfate, yttrium sulfate, hafnium sulfate, magnesium sulfate, barium sulfate, and hydrates thereof.

When the solution that includes the acidic metal salt that includes the element (b) is mixed into the aqueous slurry solution that includes the titanium dioxide particle and the compound that includes the element (a), the resulting mixture has a pH within a strongly acidic region. It is preferable to adjust the pH of the mixture to 2 to 7 by adding a base such as sodium hydroxide.

### (Step 3)

In the step 3, the solid obtained by the step 2 is subjected to drying or calcining, or both, to obtain the aqueous ink pigment. In the third embodiment, the solid may be subjected to both drying and calcining, or may be subjected to either drying or calcining.

### [Drying]

In the third embodiment, the solid obtained by the step 2 may be dried to obtain a powder. The drying (heating) temperature is preferably room temperature to 300°C, and more preferably room temperature to 200°C.

The powder may be obtained using a method that heats the solid at a given temperature, removes water or a solvent, and grinds or classifies the residue (solid), a method that removes water or a solvent at a low temperature to room temperature, heats the residue at a given temperature, and grinds or classifies the resulting solid (e.g., freeze-drying method or vacuum drying method), a method that adds a poor solvent such as methanol to the solid to effect aggregation, followed by filtration and drying, or a method that sprays particles having a particle size of 10 micrometers or less using a spray dryer, and volatilizes the solvent to obtain a powder, for example.

### [Calcining]

The solid obtained by the step 2, or the powder obtained by the drying step, may be calcined. The calcining temperature is preferably 300 to 1000°C, more preferably 650°C or less, and still more preferably 600°C or less. The solid or the powder may be calcined at a constant temperature, or may be calcined while gradually increasing the temperature from room temperature. The calcining time may be determined taking account of the calcining temperature, but is preferably 1 to 24 hours. The solid or the powder may be calcined in the air, or may be calcined in an inert gas (e.g., nitrogen or argon). The solid or the powder may be calcined under reduced pressure or vacuum.

### <Aqueous ink composition>

The aqueous ink composition according to the third embodiment includes the aqueous ink pigment and water. The aqueous ink composition may be prepared by wet-grinding the aqueous ink pigment to have the desired particle size, and dispersing the ground aqueous ink pigment in water.

A grinder/disperser such as a bead mill, a jet mill, a ball mill, a sand mill, an attritor, a roll mill, an agitator mill, a Henschel mixer, a colloid mill, an ultrasonic homogenizer, or an Angmil may be used.

The aqueous ink pigment may be preliminarily ground using a mortar before introducing the aqueous ink pigment into the grinder/disperser. A pre-mixing mixer may also be used. The aqueous ink composition may be subjected directly to the subsequent step, or may be subjected to centrifugation, filtration under pressure, filtration under reduced pressure, or the like in order to remove a small amount of large particles.

The aqueous ink pigment is preferably added in a ratio of 1 to 60 wt%, and more preferably 3 to 50 wt%, based on the total amount of the aqueous ink composition. An aqueous ink composition that includes the aqueous ink pigment in a ratio within the above range includes only a small amount of large particles, and ensures that the pigment particles exhibit excellent water-dispersibility and hard-caking resistance.

It is preferable to adjust the pH of the aqueous ink composition to 6 to 12 by adding a base such as sodium hydroxide or an acid such as hydrochloric acid, as required.

The aqueous ink composition according to the third embodiment may include an anionic surfactant, a cationic surfactant, an amphoteric surfactant, a nonionic surfactant, a polymer dispersant, an antifoaming agent, a pH-adjusting agent, a preservative, a fungicide, a fixing resin, an additional pigment, a dye, and the like.

Examples of the application of the aqueous ink composition according to the third embodiment include ink-jet printing, offset printing, gravure printing, and the like. Note that the aqueous ink composition according to the third embodiment is particularly suitable for ink-jet printing.

### EXAMPLES

The surface-coated particles according to the embodiments of the invention and use thereof are further described below by way of Examples A to C. Note that the scope of the invention is not limited to the following examples.

### Example A

### (Compositional ratio of surface-coated particle)

The elements included in the powder obtained in each example or comparative example were determined by X-ray fluorescence analysis (XRF).
Preparation of sample: A tablet was prepared as a sample, and attached to a sample holder.
Analyzer: wavelength-dispersive X-ray fluorescence spectrometer (LAB CENTER XRF-1700 manufactured by Shimadzu Corporation)
Analytical conditions: X-ray tube: Rh 40 Kv 95 mA, aperture= φ10 mm, measurement atmosphere: vacuum
Analysis: quantitative analysis using fundamental parameter (FP) method
(Observation of surface-coated particle)

The shape of the surface-coated particle was observed using a field emission transmission electron microscope (FE-TEM) (JEM-2200FS manufactured by JEOL Ltd.), and EDS elemental mapping was performed.

### (Compositional distribution of surface-coated particle)

The compositional distribution of the surface-coated particle was determined by EELS analysis while observing the shape of the surface-coated particle using a field emission transmission electron microscope (FE-TEM) (JEM-2200FS manufactured by JEOL Ltd.).
(³¹P-NMR spectroscopy)
³¹P-NMR spectroscopy was performed under the following conditions.
Resonance frequency: 121.63 MHz
Measurement device: CMX300 (5 mm probe) manufactured by Chemagnetics
Measurement method: single pulse
Pulse width: 30° pulse (1.4 microseconds)
Bandwidth: 60 kHz
Repetition time: 10 sec
Integration count: 64 (sample 1 and sample 2), 5000 (sample 3)
Sample rotational speed: 8 kHz
Reference: H₃PO₄ (external standard)
(Measurement of zeta potential)

In Example A, the zeta potential was measured at room temperature (20°C) using a zeta potential-particle size measurement system (ELS-Z manufactured by Otsuka Electronics Co., Ltd.) utilizing a disposable cell. The concentration of the sample was adjusted so that measurable turbidity was achieved, and the pH was adjusted using a solution of hydrochloric acid or sodium hydroxide that is not coordinated to the measurement target particles.

### (X-ray diffraction measurement)

The X-ray diffraction measurement was performed using an X-ray diffractometer (Multiflex 2kW manufactured by Rigaku Corporation, CuKα-rays, λ=1.5418 angstroms).

### <Example a1>

### (Production of surface-coated particle)

160 g of a commercially available titanium dioxide powder (MC-90 manufactured by Ishihara Sangyo Kaisha, Ltd., anatase-type titanium dioxide, primary particle size: 15 nm) was added to 480 g of ion-exchanged water. After the addition of 160 g of a 10 wt% sodium hexametaphosphate aqueous solution, the mixture was stirred at room temperature to prepare a slurry solution. 83.7 g of zirconium oxychloride octahydrate was added to the slurry solution. The pH of the mixture was adjusted to 3.5 to 4.5 by slowly adding a sodium hydroxide aqueous solution, and the mixture was stirred for 20 hours. The resulting slurry solution was filtered under a pressure of 0.4 MPa. The resulting solid was dispersed in 480 g of purified water to prepare a slurry, which was filtered under a pressure of 0.4 MPa. After the addition of 200 ml of isopropanol to the resulting solid, the mixture was filtered under a pressure of 0.4 MPa, and dried inside the filtration device. The resulting powder was heated from room temperature to 500°C in the air at a rate of 5°C/min using an electric furnace, and calcined at 500°C for 2 hours.

### <Examples a2 to a7 and Comparative Examples a1 to a3>

A surface-coated particle was produced in the same manner as in Example a1, except that the pH of the mixture, the type of titanium dioxide, and/or the drying/calcining conditions were changed as shown in Table a1, and the amounts of titanium dioxide, the 10 wt% sodium hexametaphosphate aqueous solution, and zirconium oxychloride octahydrate were changed so that a powder having the composition shown in Table a1 was obtained. The compositional ratio was determined by XRF.

### <Example a8>

160 g of a commercially available titanium dioxide powder (anatase-type titanium dioxide manufactured by Ishihara Sangyo Kaisha, Ltd., primary particle size: 15 nm) was added to 480 g of ion-exchanged water. After the addition of 160 g of a 10 wt% ammonium sulfate aqueous solution, the mixture was stirred at room temperature to prepare a slurry solution. 83.7 g of zirconium oxychloride octahydrate was added to the slurry solution. The pH of the mixture was adjusted to 4.0 by slowly adding a sodium hydroxide aqueous solution, and the mixture was stirred for 2 hours. The resulting slurry solution was filtered to remove a solid, which was dried. The resulting powder was heated from room temperature to 500°C in the air at a rate of 5°C/min using an electric furnace, and calcined at 500°C for 2 hours.

### (Evaluation of water-dispersibility)

The water-dispersibility was evaluated using a bead mill grinding method and/or a 45 wt% mixing method.

### [Bead mill grinding method]

The powder obtained in each example or comparative example was ground and dispersed in an aqueous solution (solid content: 20 wt%) including sodium hydroxide and a dispersant (Shallol AN103P manufactured by Dai-ichi Kogyo Seiyaku Co., Ltd.) using a wet bead mill. Sodium hydroxide was added so that the pH of the mixture was about 8, and the dispersant was added in a ratio of 2 wt% (dry weight) based on the weight of the powder. The wet bead mill was charged with zirconia beads (diameter: 0.2 to 0.5 mm) in a filling ratio of 80%, and operated at a circumferential speed of 8 m/s (2585 rpm). The powder was ground for 1 hour.
Good: A slurry could be obtained by the above operation.
Bad: A slurry could not be obtained by the above operation, or gelation occurred during grinding.

### [45 wt% mixing method]

A transparent container (volume: 20 ml) having a flat bottom was charged with the powder (4.5 g) obtained in each example or comparative example and ion-exchanged water (5.5 ml) so that the solid content was 45 wt%, and the mixture was vertically stirred (mixed) using a vibrator. The container was placed on a horizontal plane for 24 hours. The water miscibility was determined from the state of the mixture.
Good: A homogenous liquid (slurry) was obtained by stirring.

Note that the expression "homogenous liquid (liquid properties)" used in connection with the 45 wt% mixing method means that the mixture (slurry) that has moved to the upper part of the container due to vertical stirring precipitates in the lower part of the container, the interface with the air layer is horizontal with respect to the bottom of the container, and the powder that adheres to the wall surface falls (in the same manner as droplets) with the passage of time.
Bad: A homogenous liquid was not obtained by repeated stirring, and aggregates were formed. Aggregates of the powder were observed in the mixture.

Note that the expression "homogenous liquid was not obtained (solid properties)" used in connection with the 45 wt% mixing method means that the powder that has adhered to the upper part of the container due to vertical stirring does not fall with the passage of time, or the interface between the air layer and the mixture is not horizontal with respect to the bottom of the container.

### [Evaluation of redispersibility and caking]

10 ml of the slurry obtained by bead mill grinding was put in a transparent container (volume: 20 ml) having a flat bottom, and allowed to stand at room temperature for 1 month. The mixture prepared using the 45 wt% mixing method was directly allowed to stand at room temperature for 1 month. The container was turned upside down, and the slurry or the mixture was vertically stirred. The redispersibility and caking were evaluated from the properties of the slurry, and adhesion to the bottom. Note that the redispersibility and caking were not evaluated when the evaluation result obtained using the bead mill grinding method or the 45 wt% mixing method was "Bad".
Good: The powder was homogenously dispersed in the form of a slurry, and a cake-like precipitate was not observed at the bottom. In this case, it was determined that caking resistance, redispersibility, and long-term storage stability were good.
Bad: A homogenous slurry was not obtained by repeated stirring. A cake-like precipitate was observed at the bottom. In this case, it was determined that caking resistance, redispersibility, and long-term storage stability were poor.

Table a1 shows the powder production conditions, the compositional ratio, the atomic ratio of P or S to Zr, and water-dispersibility (Examples a1 to a8 and Comparative Examples a1 to a3).

**TABLE a1**

| | pH | Titanium dioxide particle | | Drying temperature (°C) | Calcining temperature (°C) | Compositional ratio (atom%/Ti 100 atom%) | | Zr/(P or S) | Water-dispersibility | | |
|---|---|---|---|---|---|---|---|---|---|---|---|
| | | Crystal form | Primary particle size | | | P or S | Zr | | Bead mill grinding method | 45 wt% mixing method | Redisper-sibility and caking |
| Example a1 | 4 | Anatase | 15 | RT | 500 | 8.5 | 15.9 | 1.9 | Good | Good | Good |
| Example a2 | 4 | Anatase | 15 | RT | 500 | 3.0 | 15.8 | 5.3 | Good | Good | Good |
| Example a3 | 4 | Anatase/ rutile | 70 | RT | - | 3.7 | 7.7 | 2.1 | Good | - | Good |
| Example a4 | 4 | Rutile | 80 | 120 | - | 21.4 | 21.4 | 1.0 | - | Good | Good |
| Example a5 | 4 | Anatase/ rutile | 70 | 120 | - | 13.8 | 28.5 | 2.1 | - | Good | Good |
| Example a6 | 2 | Anatase | 15 | RT | 500 | 6.4 | 9.8 | 1.5 | - | Good | Good |
| Example a7 | 3 | Rutile | 270 | RT | - | 6.6 | 13.2 | 2.0 | Good | - | Good |
| Example a8 | 4 | Anatase | 15 | RT | 500 | 4.9 | 17.1 | 3.5 | - | Good | Good |
| Comparative Example a1 | 11 | Anatase | 15 | RT | 500 | 0.0 | 15.9 | Infinity | Bad | Bad | - |
| Comparative Example a2 | 4 | Rutile | 80 | RT | 500 | 0.6 | 13.2 | 23.2 | Bad | Bad | - |
| Comparative Example a3 | 4 | Rutile | 80 | 120 | - | 7.9 | 3.2 | 0.4 | Bad | Bad | - |

| | | | | | | | | | | | |
|---|---|---|---|---|---|---|---|---|---|---|---|
| P or S: P was used in Examples a1 to a7 and Comparative Examples a1 to a3, and S was used in Example a8. The anatase/rutile mixing ratio in Examples a3 and a5 was 1/1 (confirmed by XRD analysis). | | | | | | | | | | | |

### <Example a9>

### (Microparticle compositional analysis by TEM and EDS)

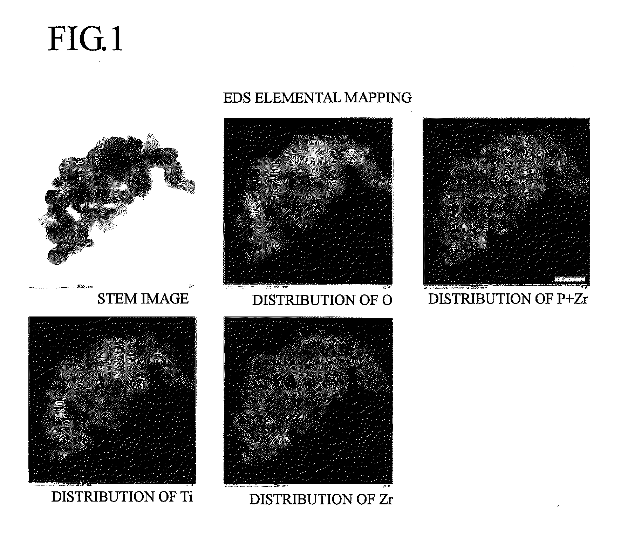

The sample powder of Example a5 was dispersed on a TEM grid, and observed as a TEM observation sample. Particles and a smoke-like amorphous substance adhering to the particles were observed. An aggregate of the particles to which a small amount of substance adhered, and an aggregate of the particles to which a large amount of substance adhered, were observed. An aggregate having an area in which a small amount of substance adhered, and an area in which a large amount of substance adhered, was subjected to EDS elemental mapping. The results are shown in FIG. 1.

The following were confirmed from the mapping results.
1. The distribution of P and Zr overlapped the distribution of Ti and O in most of the particles. P and Zr were highly distributed in the peripheral area of the particles. Therefore, it is considered that Zr and P covered the TiO₂ particles.
2. The distribution of Zr was almost identical with the distribution of P and Zr. Specifically, an uneven distribution of Zr and P was not observed.
3. Aggregates of the substance adhering to the particles were observed (size: several tens of nanometers). It is considered that these aggregates correspond to the smoke-like aggregates in the TEM image.
4. There was a tendency that a large amount of (thick) aggregates were detected at the interparticle contact points.

### <Example a10>

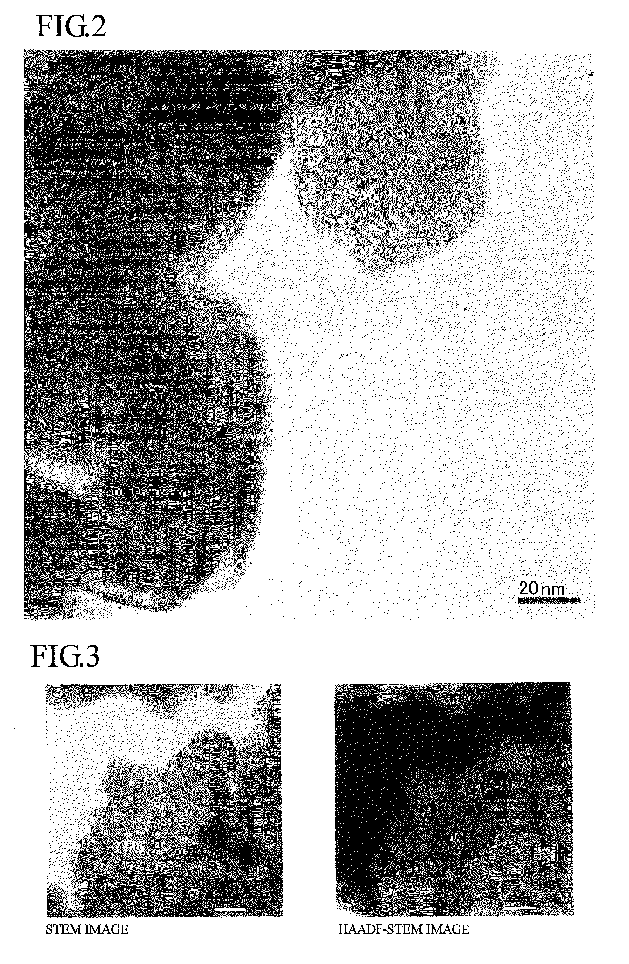

TEM observation was performed in order to observe the covering state in more detail. FIG. 2 shows a representative micrograph. As shown in FIG. 2, all of the primary particles were covered with the smoke-like substance. The thickness of the coating film was measured at several points of each photograph at which the edge of titanium dioxide was relatively clearly observed. The thickness of the coating film thus measured was 1.7 nm or more.

### <Example a11>

### (Microparticle compositional analysis by TEM and EELS)

The sample powder of Example a1 was dispersed on a TEM grid, and observed as a TEM observation sample. The powder adhering to the micro grid was observed so that a plurality of particles did not overlap during analysis (i.e., an area in which the powder was sufficiently dispersed).

A STEM (scanning transmission electron microscopy) image and an HAADF-STEM (high-angle annular dark-field scanning transmission electron microscopy) image were captured using FE-TEM. FIG. 3 shows the observation results. A white contrast was observed at the edge of the outer periphery of the particles. Since a part having a composition with a large atomic number is observed brightly, it is considered that a coating layer including Zr was present.

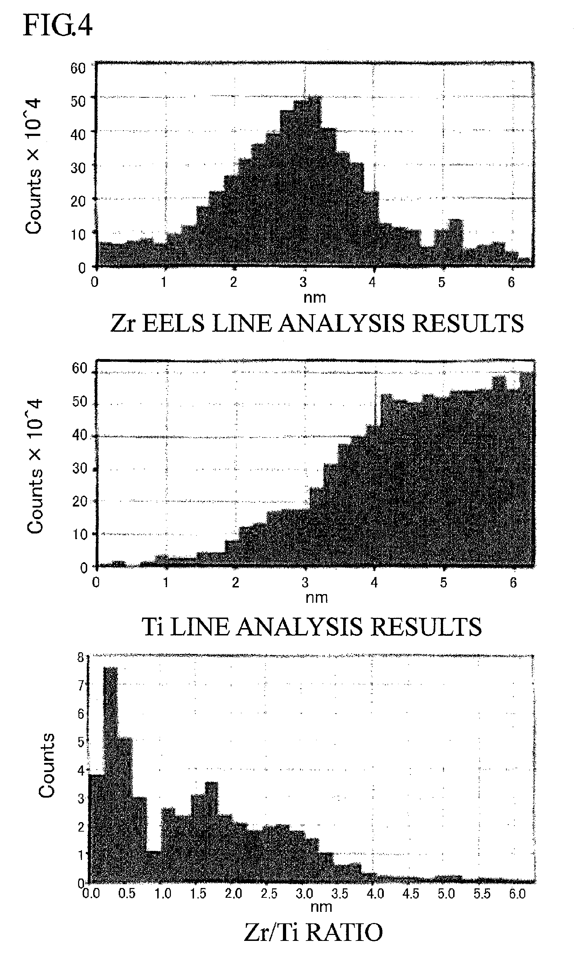

FIG. 4 shows the EELS line analysis results. The spectrum at the Zr-M absorption edge and the spectrum at the Ti-L absorption edge were measured at the same time, and the intensity distribution was used as the line analysis results. The line analysis was performed from the outside of the particles toward the inside of the particles. Since Zr was detected on the outer side of the particles, it is considered that a layer including Zr covered the titanium dioxide particles. Since the intensity detected by EELS is affected by the thickness of the sample, the distribution of the Zr/Ti ratio obtained by dividing the Zr detection intensity by the Ti detection intensity was determined in order to remove the effects of the shape of the titanium dioxide particles. The Zr/Ti ratio was also higher on the outer side of the particles.

### <Comparative Example a4>

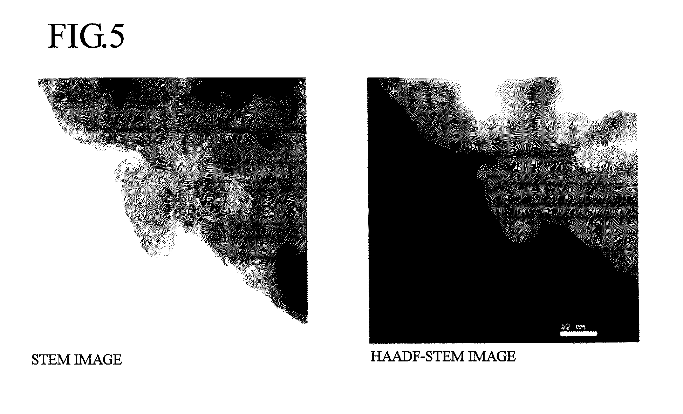

The sample powder of Comparative Example a1 that did not include a phosphorus atom was analyzed in the same manner as described above. FIG. 5 shows the observation results for the STEM image and the HAADF-STEM image. The interparticle boundary was unclear as compared with Example a1, and aggregates of the particles were observed.

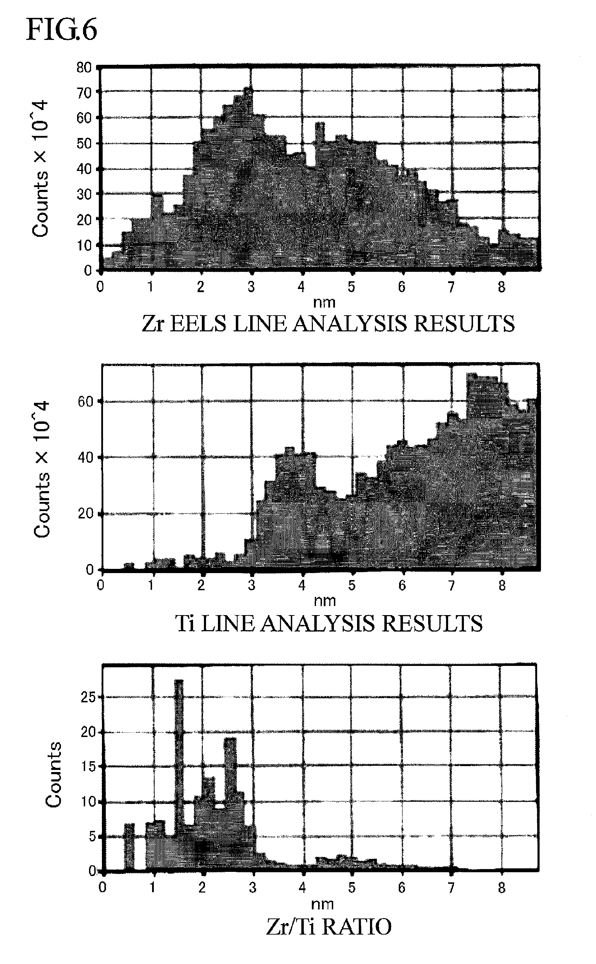

FIG. 6 shows the EELS line analysis results. It was confirmed from the HAADF-STEM image and the EELS line analysis that the particles were not uniformly covered as compared with Example a1. A mass that is considered to be a mass of Zr was also observed.

### <Example a12>

A reaction between sodium hexametaphosphate and zirconium oxychloride was analyzed by ³¹P-NMR analysis.

Samples 1 to 3 were subjected to solid-state NMR analysis under the following conditions.
Sample 1: Sodium hexametaphosphate ((NaPO₃)₆)
Sample 2: Particles produced by adding 83.7 g of zirconium oxychloride octahydrate to 160 g of a 10 wt% sodium hexametaphosphate aqueous solution, and adjusting the pH of the mixture to 3.5 to 4.0 by adding a sodium hydroxide aqueous solution, followed by washing, filtration, and drying
Sample 3: Surface-coated particles produced in the same manner as in Example a1

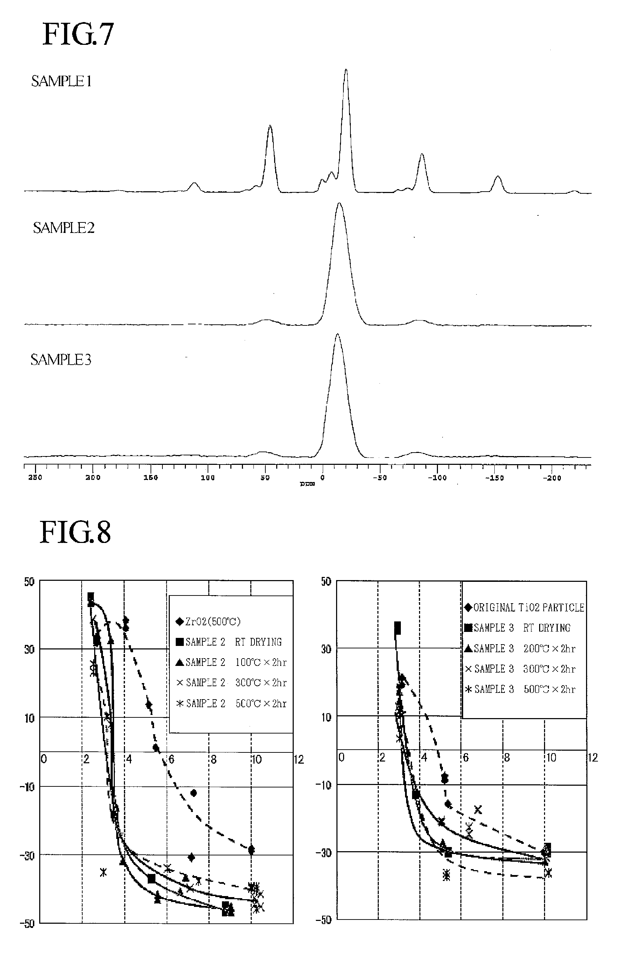

The results are shown in FIG. 7.
Sample 1 ((NaPO₃)₆) had a main signal band at -21 ppm, and a plurality of spinning side bands (SSB) were observed (i.e., chemical shift anisotropy was high).
Sample 2 (particles) had a single band at -13 ppm, and the number of spinning side bands (SSB) was small. Sample 2 was not a mere mixture of (NaPO₃)₆ and ZrOₓ(OH)_{y} due to a change in structure that occurred around P.
Sample 3 (surface-coated particles) and Sample 2 (particles) were almost identical as to the position and the shape of the main peak, and the positions and the number of spinning side bands (SSB).

It is considered from the above results that only a small amount of sodium hexametaphosphate (raw material) was present on the surface of the surface-coated particles, and a complex derived from sodium hexametaphosphate and zirconium oxychloride was mainly present on the surface of the surface-coated particles.

When using sodium dihydrogen phosphate as the phosphoric acid source, a spectrum was obtained that was almost identical with those of the complex particles and the surface-coated particles according to the invention as to the position and the shape of the main peak, and the positions and the number of side bands.

### <Example a13>

### (Surface potential)

The surface potential of zirconium dioxide (ZrO₂) particles, Sample 2 of Example a12, titanium dioxide (TiO₂) particles, and Sample 3 of Example a12 was measured. The results are shown in FIG. 8.

The isoelectric point of Sample 2 was shifted to the acidic side as compared with ZrO₂ particles, and a change in potential and isoelectric point due to the calcining temperature was small. Therefore, it is considered that a phosphoric acid group was present on the surface of the particles. The isoelectric point of Sample 3 was shifted to the acidic side to some extent as compared with TiO₂ particles. Therefore, it is considered that a phosphoric acid group was present on the surface of the particles.

### <Example a14>

### (X-ray diffraction measurement)

The powder of Example a1 was subjected to X-ray diffraction measurement. The average primary particle size before calcining at 500°C was 15 nm, and the average primary particle size after calcining was also 15 nm. The particle growth rate was 0%. It was confirmed that the entire surface of the particles was covered.

### Example B

### (Compositional analysis of particles)

The elements included in the powder obtained in each example or comparative example were determined by X-ray fluorescence analysis (XRF).
Preparation of sample: A tablet was prepared as a sample, and attached to a sample holder.
Analyzer: wavelength-dispersive X-ray fluorescence spectrometer (LAB CENTER XRF-1700 manufactured by Shimadzu Corporation)
Analytical conditions: X-ray tube: Rh 40 Kv 95 mA, aperture= φ10 mm, measurement atmosphere: vacuum
Analysis: quantitative analysis using fundamental parameter (FP) method

### (Measurement of specific surface area by nitrogen adsorption method)

The specific surface area (m²/g) (BET method) of the particles was determined by the nitrogen adsorption method at liquid nitrogen temperature (77K) using a device "BELSORP-mini" (manufactured by BEL Japan, Inc.).

### (Measurement of specific surface area by water vapor adsorption method)

The specific surface area (m²/g) (BET method) of the particles was determined at an adsorption temperature of 25°C (adsorption gas: H₂O) using a device "BELSORP-max" (manufactured by BEL Japan, Inc.).

### (Observation of shape of particles)

The shape of the particles was observed using a field emission transmission electron microscope (FE-TEM) (JEM-2200FS manufactured by JEOL Ltd.). EDS elemental mapping was then performed.

### (Compositional distribution of particles)

The compositional distribution of the particles was determined by TEM-EELS analysis.
(³¹P-NMR spectroscopy)
³¹P-NMR spectroscopy was performed under the following conditions.
Resonance frequency: 121.63 MHz
Measurement device: CMX300 (5 mm probe) manufactured by Chemagnetics
Measurement method: single pulse
Pulse width: 30° pulse (1.4 microseconds)
Bandwidth: 60 kHz
Repetition time: 10 sec
Integration count: 64 (sample 1 and sample 2), 5000 (sample 3)
Sample rotational speed: 8 kHz
Reference: H₃PO₄ (external standard)
(Measurement of zeta potential)

In Example B, the zeta potential was measured at room temperature (20°C) using a zeta potential-particle size measurement system (ELS-Z manufactured by Otsuka Electronics Co., Ltd.) utilizing a disposable cell. The concentration of the sample was adjusted so that measurable turbidity was achieved, and the pH was adjusted using a solution of hydrochloric acid or sodium hydroxide that is not coordinated to the measurement target particles.

### <Example b1>

### (Production of particles)

160 g of a commercially available titanium dioxide powder (anatase/rutile=5/5, primary particle size: 80 nm) was added to 480 g of ion-exchanged water. After the addition of 160 g of a 10 wt% sodium hexametaphosphate aqueous solution, the mixture was stirred at room temperature to prepare a slurry solution. 83.7 g of zirconium oxychloride octahydrate was added to the slurry solution. The pH of the mixture was adjusted to 3.5 to 4.5 by slowly adding a sodium hydroxide aqueous solution, and the mixture was stirred for 20 hours. The resulting slurry solution was filtered under a pressure of 0.4 MPa. The resulting solid was dispersed in 480 g of purified water to prepare a slurry, which was filtered under a pressure of 0.4 MPa. After the addition of 200 ml of isopropanol to the resulting solid, the mixture was filtered under a pressure of 0.4 MPa, and dried inside the filtration device. The residual water in the solid was replaced with isopropanol, and the solid was removed, and dried at room temperature to obtain a powder.

### <Example b2>

A powder was produced in the same manner as in Example b1. The powder was heated from room temperature to 300°C in the air at a rate of 5°C/min using an electric furnace, and calcined at 300°C for 2 hours.

### <Example b3>

A powder was produced in the same manner as in Example b1. The powder was heated from room temperature to 500°C in the air at a rate of 5°C/min using an electric furnace, and calcined at 500°C for 2 hours.

### <Example b4>

A powder was produced in the same manner as in Example b1, except that a commercially available titanium dioxide powder (rutile-type titanium dioxide, primary particle size: 180 nm) was used as the titanium dioxide powder.

### <Comparative Example b1>

Commercially available titanium dioxide (oxide of Al and Zr, surface-treated with a hydroxide, rutile-type titanium dioxide, primary particle size of titanium dioxide: 15 nm) was used.

### <Comparative Example b2>

Particles were produced in the same manner as in Example b1, except that a commercially available titanium dioxide powder (rutile-type titanium dioxide, primary particle size: 35 nm) was used as the titanium dioxide powder. The particles were heated from room temperature to 800°C in the air at a rate of 5°C/min using an electric furnace, and calcined at 800°C for 2 hours to obtain a powder.

### <Comparative Example b3>

A powder was produced in the same manner as in Example b1, except that a commercially available titanium dioxide powder (anatase-type titanium dioxide, primary particle size: 35 nm) was used as the titanium dioxide powder, zirconium oxychloride was not added, and the pH was adjusted using a 10 N hydrochloric acid solution. The powder was heated from room temperature to 500°C in the air at a rate of 5°C/min using an electric furnace, and calcined at 500°C for 2 hours.

### (Evaluation of water-dispersibility)

The water-dispersibility was evaluated using a bead mill grinding method and/or a 45 wt% mixing method.

### [Bead mill grinding method]

The powder obtained in each example or comparative example was ground and dispersed in an aqueous solution (solid content: 20 wt%) including sodium hydroxide and a dispersant (Shallol AN103P manufactured by Dai-ichi Kogyo Seiyaku Co., Ltd.) using a wet bead mill. Sodium hydroxide was added so that the pH of the mixture was about 8, and the dispersant was added in a ratio of 2 wt% (dry weight) based on the weight of the powder. The wet bead mill was charged with zirconia beads (diameter: 0.2 to 0.5 mm) in a filling ratio of 80%, and operated at a circumferential speed of 8 m/s. The powder was dispersed for 1 hour.
Good: A slurry could be obtained by the above operation.
Bad: A slurry could not be obtained by the above operation, or gelation occurred during grinding.

### [Measurement of viscosity of slurry]

In Examples b1 to b4 and Comparative Examples b2 and b3 in which a slurry could be obtained, the viscosity (when 5 minutes had elapsed after the start of rotation) of the slurry was measured using a rotational viscometer (VISCOMETER TV-22 manufactured by Toki Sangyo Co., Ltd.) at a temperature of 20°C and a rotational speed of 100 rpm. When the viscosity was more than 5.0 mPa·s, it was determined that the slurry had high viscosity.

### [45 wt% mixing method]

A transparent container (volume: 20 ml) having a flat bottom was charged with the powder (4.5 g) obtained in each example or comparative example and ion-exchanged water (5.5 ml) so that the solid content was 45 wt%, and the mixture was vertically stirred (mixed) using a vibrator. The container was placed on a horizontal plane for 24 hours. The water miscibility was determined from the state of the mixture.
Good: A homogenous liquid (slurry) was obtained by stirring.

Note that the expression "homogenous liquid (liquid properties)" used in connection with the 45 wt% mixing method means that the mixture (slurry) that has moved to the upper part of the container due to vertical stirring precipitates in the lower part of the container, the interface with the air layer is horizontal with respect to the bottom of the container, and the powder that adheres to the wall surface falls (in the same manner as droplets) with the passage of time.

Bad: A homogenous liquid was not obtained by repeated stirring, and aggregates were formed. Aggregates of the powder were observed in the mixture.

Note that the expression "homogenous liquid was not obtained (solid properties)" used in connection with the 45 wt% mixing method means that the powder that has adhered to the upper part of the container due to vertical stirring does not fall with the passage of time, or the interface between the air layer and the mixture is not horizontal with respect to the bottom of the container.

### [Evaluation of redispersibility and caking]

10 ml of the slurry obtained by bead mill grinding was put in a transparent container (volume: 20 ml) having a flat bottom, and allowed to stand at room temperature for 1 month. The mixture prepared using the 45 wt% mixing method was directly allowed to stand at room temperature for 1 month. The container was turned upside down, and the slurry or the mixture was vertically stirred. The redispersibility and caking were evaluated from the properties of the slurry, and adhesion to the bottom. Note that the redispersibility and caking were not evaluated when the evaluation result obtained using the bead mill grinding method or the 45 wt% mixing method was "Bad", or the slurry had high viscosity.
Good: The powder was homogenously dispersed in the form of a slurry, and a cake-like precipitate was not observed at the bottom. In this case, it was determined that caking resistance, redispersibility, and long-term storage stability were good.
Bad: A homogenous slurry was not obtained by repeated stirring. A cake-like precipitate was observed at the bottom. In this case, it was determined that caking resistance, redispersibility, and long-term storage stability were poor.

Table b1 shows the powder production conditions, the compositional ratio, the specific surface area (A_{BET(H2O)}), the specific surface area (A_{BET(N2)}), the ratio (A_{BET(H2O)}/A_{BET(N2)}), and the water-dispersibility (Examples b1 to b4 and Comparative Examples b1 to b3).

**TABLE b1**

| | TiO₂ particle | | Drying/ calcining temperature (°C) | Compositional ratio (atom%/Ti 100 atom%) | | | Evaluation of water-dispersibility | | | | BET measured value | | |
|---|---|---|---|---|---|---|---|---|---|---|---|---|---|
| | Crystal form (before calcining) | Primary particle size (before calcining) | | Zr | P | Al | 45 wt% mixing method | Bead mill grinding method | Viscosity (mPa·s) (measured value) | Redisper-sibility and hard-caking resistance | A_{BET(H2O)} | A_{BET(N2)} | A_{BET(H2O)/}A_{BET(N2)} |
| Example b1 | Anatase/ rutile | 80 | Drying at room temperature | 14 | 7 | 0 | Good | Good | Good (1.6) | Good | 115.50 | 49.9 | 2.3 |
| Example b2 | Anatase/ rutile | 80 | 300°C×2 hr | 14 | 7 | 0 | Good | Good | Good (2.1) | Good | 81.27 | 65.2 | 1.2 |
| Example b3 | Anatase/ rutile | 80 | 500°C×2 hr | 14 | 7 | 0 | Good | Good | Good (2.1) | Good | 45.80 | 45.2 | 1.0 |
| Example b4 | Rutile | 180 | Drying at room temperature | 14 | 7 | 0 | Good | Good | Good (2.2) | Good | 115.50 | 49.9 | 2.3 |
| Comparative Example b1 | Rutile | 15 | - | 2 | 0 | 15 | Bad | Bad | - | - | 65.63 | 79.6 | 0.8 |
| Comparative Example b2 | Rutile | 35 | 800°C×2 hr | 14 | 7 | 0 | Good | Good | Bad (8.31) | - | 29.14 | 32.4 | 0.9 |
| Comparative Example b3 | Anatase | 35 | 500°C×2 hr | 0 | 3 | 0 | Good | Good | Bad (49) | - | 46.98 | 58.0 | 0.8 |

### <Example b5>

### (Microparticle compositional analysis by TEM and EDS)

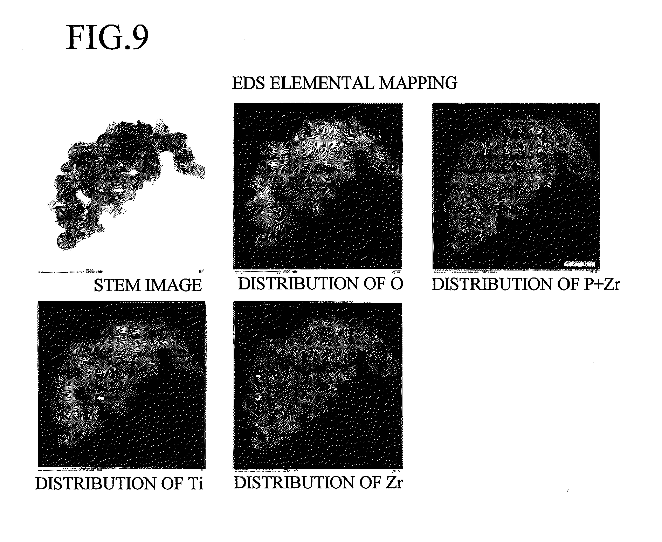

The sample powder of Example b1 was dispersed on a TEM grid, and observed as a TEM observation sample. Particles and a smoke-like amorphous substance adhering to the particles were observed. An aggregate of the particles to which a small amount of substance adhered, and an aggregate of the particles to which a large amount of substance adhered, were observed. An aggregate having an area in which a small amount of substance adhered, and an area in which a large amount of substance adhered, was subjected to EDS elemental mapping. The results are shown in FIG. 9.

The following were confirmed from the mapping results.
1. The distribution of P and Zr overlapped the distribution of Ti and O in most of the particles.
2. The distribution of Zr was almost identical with the distribution of P and Zr. Specifically, an uneven distribution of Zr and P was not observed.
3. Aggregates of the substance adhering to the particles were observed (size: several tens of nanometers). It is considered that these aggregates correspond to the smoke-like aggregates in the TEM image.
4. There was a tendency that a large amount of (thick) aggregates were detected at the interparticle contact points.

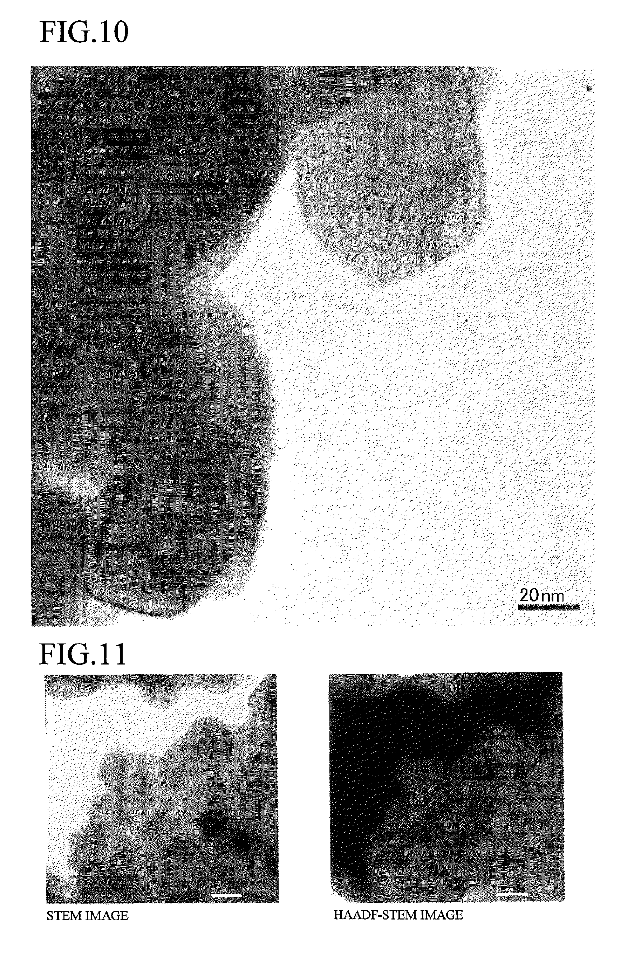

TEM observation was performed in order to observe the covering state in more detail. FIG. 10 shows a representative micrograph. As shown in FIG. 10, all of the primary particles were covered with the smoke-like substance. The thickness of the coating film was measured at several points of each photograph at which the edge of titanium dioxide was relatively clearly observed. The thickness of the coating film thus measured was 1.7 nm or more.

### <Example b6>

### (Microparticle compositional analysis by TEM and EELS)

The sample powder of Example b1 was dispersed on a TEM grid, and observed as a TEM observation sample. The powder adhering to the micro grid was observed so that a plurality of particles did not overlap during analysis (i.e., an area in which the powder was sufficiently dispersed).

A STEM (scanning transmission electron microscopy) image and an HAADF-STEM (high-angle annular dark-field scanning transmission electron microscopy) image were captured using FE-TEM. FIG. 11 shows the observation results. A white contrast was observed at the edge of the outer periphery of the particles. Since a part having a composition with a large atomic number is observed brightly, it is considered that a coating layer including Zr was present.

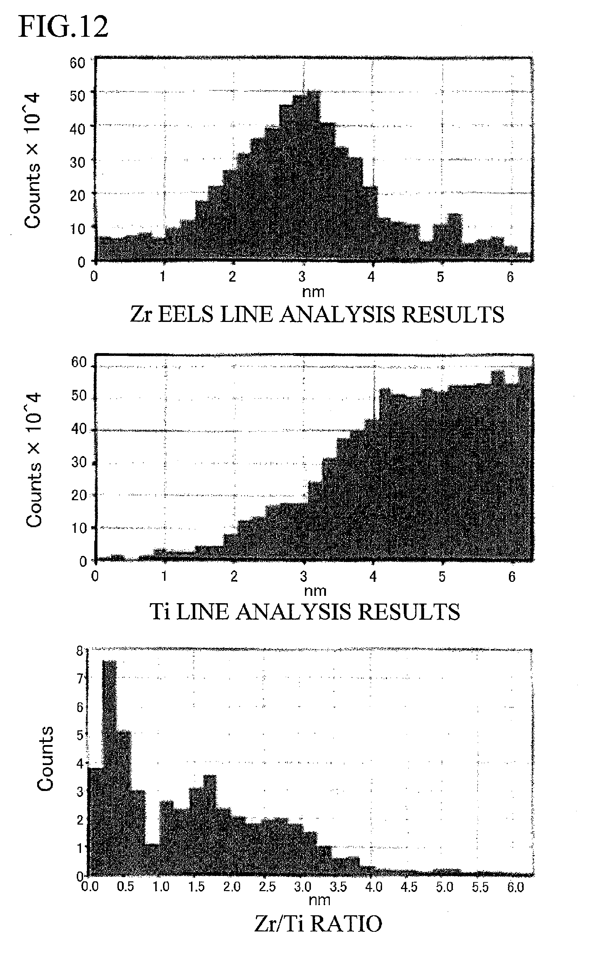

FIG. 12 shows the EELS line analysis results. The spectrum at the Zr-M absorption edge and the spectrum at the Ti-L absorption edge were measured at the same time, and the intensity distribution was used as the line analysis results. The line analysis was performed from the outside of the particles toward the inside of the particles. Since Zr was detected on the outer side of the particles, it is considered that a layer including Zr covered the titanium dioxide particles. Since the intensity detected by EELS is affected by the thickness of the sample, the distribution of the Zr/Ti ratio obtained by dividing the Zr detection intensity by the Ti detection intensity was determined in order to remove the effects of the shape of the titanium dioxide particles. The Zr/Ti ratio was also higher on the outer side of the particles.

### <Example b7>

A reaction between sodium hexametaphosphate and zirconium oxychloride was analyzed by ³¹P-NMR analysis.

Samples 1 to 3 were subjected to solid-state NMR analysis under the following conditions.
Sample 1: Sodium hexametaphosphate ((NaPO₃)₆)
Sample 2: Particles produced by adding 83.7 g of zirconium oxychloride octahydrate to 160 g of a 10 wt% sodium hexametaphosphate aqueous solution, and adjusting the pH of the mixture to 3.5 to 4.0 by adding a sodium hydroxide aqueous solution, followed by washing, filtration, and drying
Sample 3: Surface-coated particles produced in the same manner as in Example b1

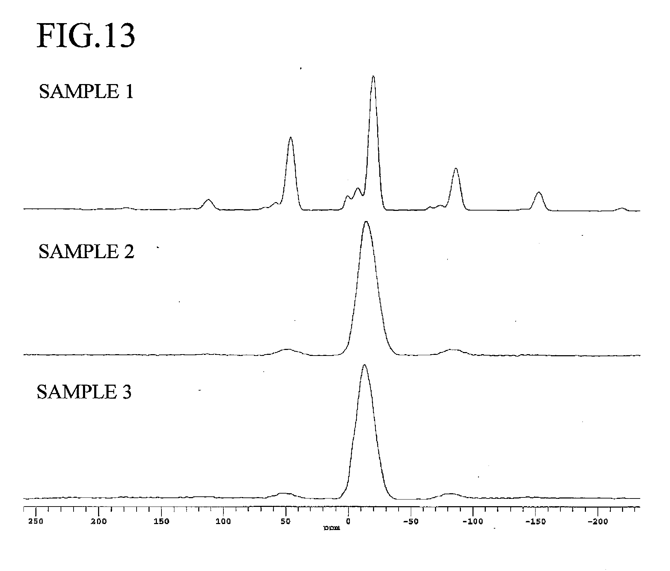

The results are shown in FIG. 13.

The mixed particles were produced by adding 83.7 g of zirconium oxychloride octahydrate to 160 g of a 10 wt% sodium hexametaphosphate aqueous solution, and adjusting the pH of the mixture to 4.0 to 4.5 by adding a sodium hydroxide aqueous solution, followed by washing, filtration, and drying.
Sample 1 ((NaPO₃)₆) had a main signal band at -21 ppm, and a plurality of spinning side bands (SSB) were observed (i.e., chemical shift anisotropy was high).
Sample 2 (particles) had a single band at -13 ppm, and the number of spinning side bands (SSB) was small. Sample 2 was not a mere mixture of (NaPO₃)₆ and ZrOₓ(OH)_{y} due to a change in structure that occurred around P.
Sample 3 (particles) and Sample 2 (particles) were almost identical as to the position and the shape of the main peak, and the positions and the number of spinning side bands (SSB).

It is considered from the above results that only a small amount of sodium hexametaphosphate (raw material) was present on the surface of the particles, and a complex including sodium hexametaphosphate and zirconium oxychloride was mainly present on the surface of the surface-coated particles.

### <Example b8>

### (Surface potential)

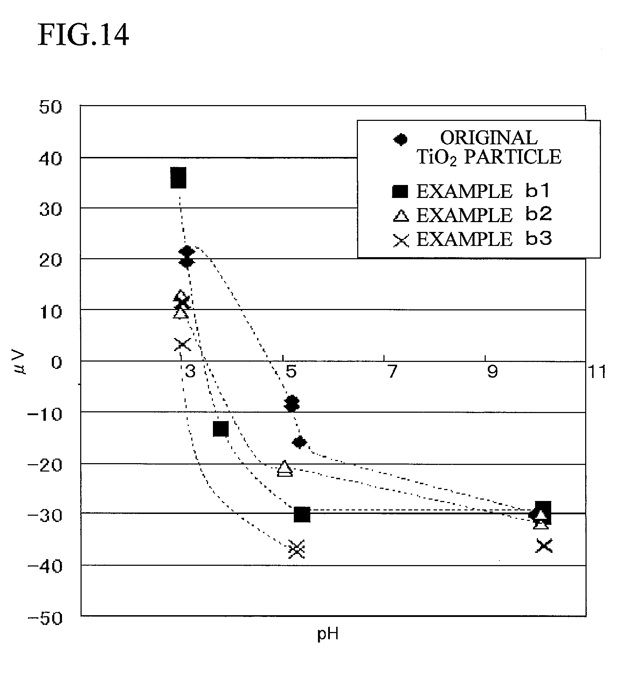

FIG. 14 shows the surface potential measurement results of titanium dioxide and the particles of Examples b1, b2, and b3. The particles of Examples b1, b2, and b3 had an isoelectric point of pH 4 or less (i.e., the isoelectric point was shifted to the acidic side as compared with titanium dioxide), and the amount of surface charge (absolute value of surface potential) increased. It is considered that an acidic and hydrophilic polar group was present on the surface of the particles of Examples b1, b2, and b3.

### Example C

### (Compositional ratio of aqueous ink pigment)

The elements included in the powder obtained in each example or comparative example were determined by X-ray fluorescence analysis (XRF).
Preparation of sample: A tablet was prepared as a sample, and attached to a sample holder.
Analyzer: wavelength-dispersive X-ray fluorescence spectrometer (LAB CENTER XRF-1700 manufactured by Shimadzu Corporation)
Analytical conditions: X-ray tube: Rh 40 Kv 95 mA, aperture= φ10 mm, measurement atmosphere: vacuum
Analysis: quantitative analysis using fundamental parameter (FP) method

### (Observation of aqueous ink pigment)

The shape of the aqueous ink pigment was observed using a field emission transmission electron microscope (FE-TEM) (JEM-2200FS manufactured by JEOL Ltd.). EDS elemental mapping was then performed.

### (Measurement of zeta potential)

In Example C, the zeta potential was measured at room temperature (20°C) using a zeta potential-particle size measurement system (ELS-Z manufactured by Otsuka Electronics Co., Ltd.) utilizing a disposable cell. The concentration of the sample was adjusted so that measurable turbidity was achieved, and the pH was adjusted using a solution of hydrochloric acid or sodium hydroxide that is not coordinated to the measurement target particles.

### <Example c1>

### (Production of aqueous ink pigment)

160 g of a commercially available titanium dioxide powder (MC-90, anatase-type titanium dioxide, primary particle size: 15 nm) was added to 480 g of ion-exchanged water. After the addition of 160 g of a 10 wt% sodium hexametaphosphate aqueous solution, the mixture was stirred at room temperature to prepare a slurry solution. 83.7 g of zirconium oxychloride octahydrate was added to the slurry solution. The pH of the mixture was adjusted to 3.5 to 4.0 by slowly adding a sodium hydroxide aqueous solution, and the mixture was stirred for 20 hours. The resulting slurry solution was filtered under a pressure of 0.4 MPa, and the resulting solid was dispersed in 480 ml of ion-exchanged water. The dispersion was filtered under a pressure of 0.4 MPa, and dried in the filtration device at room temperature under pressure. The resulting powder was heated from room temperature to 500°C in the air at a rate of 5°C/min using an electric furnace, and calcined at 500°C for 2 hours.

### <Examples c2 to c6 and Comparative Examples c1 to c4>

A powder was produced in the same manner as in Example c1, except that the pH of the mixture, the type of titanium dioxide, and/or the drying/calcining conditions were changed as shown in Table c1, and the amounts of titanium dioxide, the 10 wt% sodium hexametaphosphate aqueous solution, and zirconium oxychloride octahydrate were changed so that a powder having the composition shown in Table c1 was obtained. The compositional ratio was determined by XRF.

### (Evaluation of water-dispersibility)

The water-dispersibility was evaluated using a bead mill grinding method and/or a 45 wt% mixing method.

### [Bead mill grinding method]

The powder obtained in each example or comparative example was ground and dispersed in an aqueous solution (solid content: 20 wt%) including sodium hydroxide and a dispersant (Shallol AN103P manufactured by Dai-ichi Kogyo Seiyaku Co., Ltd.) using a wet bead mill. Sodium hydroxide was added so that the pH of the mixture was about 8, and the dispersant was added in a ratio of 2 wt% (dry weight) based on the weight of the powder. The wet bead mill was charged with zirconia beads (diameter: 0.2 to 0.5 mm) in a filling ratio of 80%, and operated at a circumferential speed of 8 m/s. The powder was dispersed for 1 hour.
Good: A slurry could be obtained by the above operation.
Bad: A slurry could not be obtained by the above operation, or gelation occurred during grinding.

### [45 wt% mixing method]

A transparent container (volume: 20 ml) having a flat bottom was charged with the powder (4.5 g) obtained in each example or comparative example and ion-exchanged water (5.5 ml) so that the solid content was 45 wt%, and the mixture was allowed to stand for 24 hours. The water miscibility was determined from the state of the mixture.
Good: A homogenous liquid (slurry) was obtained by stirring.

Note that the expression "homogenous liquid (liquid properties)" used in connection with the 45 wt% mixing method means that the mixture (slurry) that has moved to the upper part of the container due to vertical stirring precipitates in the lower part of the container, the interface with the air layer is horizontal with respect to the bottom of the container, and the powder that adheres to the wall surface falls (in the same manner as droplets) with the passage of time.
Bad: A homogenous liquid was not obtained by repeated stirring, and aggregates were formed. Aggregates of the powder were observed in the mixture.

Note that the expression "homogenous liquid was not obtained (solid properties)" used in connection with the 45 wt% mixing method means that the powder that has adhered to the upper part of the container due to vertical stirring does not fall with the passage of time, or the interface between the air layer and the mixture is not horizontal with respect to the bottom of the container.

### [Evaluation of redispersibility and caking resistance]

10 ml of the slurry obtained by bead mill grinding was put in a transparent container (volume: 20 ml) having a flat bottom, and allowed to stand at room temperature for 1 month. The mixture prepared using the 45 wt% mixing method was directly allowed to stand at room temperature for 1 month. The container was turned upside down, and the slurry or the mixture was vertically stirred. The redispersibility and caking were evaluated from the properties of the slurry, and adhesion to the bottom. Note that the redispersibility and caking were not evaluated when the evaluation result obtained using the bead mill grinding method or the 45 wt% mixing method was "Bad".
Good: The powder was homogenously dispersed in the form of a slurry, and a cake-like precipitate was not observed at the bottom. In this case, it was determined that caking resistance, redispersibility, and long-term storage stability were good.
Bad: A homogenous slurry was not obtained by repeated stirring. A cake-like precipitate was observed at the bottom. In this case, it was determined that caking resistance, redispersibility, and long-term storage stability were poor.

Table c1 shows the powder production conditions, the compositional ratio of Ti, P, and Zr, and the water-dispersibility evaluation results (Examples c1 to c6 and Comparative Examples c1 to c4).

**TABLE c1**

| | pH | Titanium dioxide | | Drying or calcining temperature (°C) | Compositional ratio (atom%) | | | Water-dispersibility | | |
|---|---|---|---|---|---|---|---|---|---|---|
| | | Crystal form | Primary particle size (nm) | | Ti | P | Zr | Bead mill grinding method | 45 wt% mixing method | Redisper-sibility and caking resistance |
| Example c1 | 4.0 | Anatase | 15 | 500 | 84.1 | 2.5 | 13.3 | Good | Good | Good |
| Example c2 | 4.0 | Anatase/rutile | 70 | RT | 89.8 | 3.3 | 6.9 | Good | - | Good |
| Example c3 | 4.0 | Anatase | 15 | 500 | 82.5 | 5.6 | 11.8 | Good | - | Good |
| Example c4 | 4.0 | Rutile | 180 | RT | 82.9 | 6.5 | 10.6 | Good | - | Good |
| Example c5 | 4.0 | Rutile | 80 | 120 | 80.7 | 6.3 | 12.9 | - | Good | Good |
| Example c6 | 4.0 | Rutile | 80 | 120 | 79.5 | 7.8 | 12.7 | - | Good | Good |
| Comparative Example c1 | 11.0 | Anatase | 15 | 500 | 86.3 | 0.0 | 13.7 | Bad | - | - |
| Comparative Example c2 | 4.0 | Rutile | 80 | 500 | 87.9 | 0.5 | 11.6 | Bad | - | - |
| Comparative Example c3 | 4.0 | Rutile | 80 | RT | 94.9 | 1.3 | 3.8 | - | Bad | - |
| Comparative Example c4 | 4.0 | Rutile | 80 | 120 | 90.1 | 7.1 | 2.9 | - | Bad | - |

### <Example c7>

### (Microparticle compositional analysis by TEM and EDS)

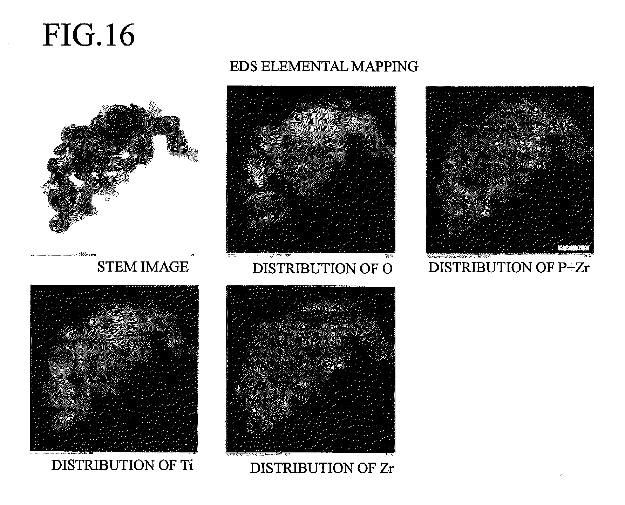

The sample powder of Example c2 was dispersed on a TEM grid, and observed as a TEM observation sample. Particles and a smoke-like amorphous substance adhering to the particles were observed. An aggregate of the particles to which a small amount of substance adhered, and an aggregate of the particles to which a large amount of substance adhered, were observed. An aggregate having an area in which a small amount of substance adhered, and an area in which a large amount of substance adhered, was subjected to EDS elemental mapping. The results are shown in FIG. 16.

The following were confirmed from the mapping results.
1. The distribution of P and Zr overlapped the distribution of Ti and O in most of the particles. P and Zr were highly distributed in the peripheral area of the TiO₂ particles. Therefore, it is considered that P and Zr covered the TiO₂ particles.
2. The distribution of Zr was almost identical with the distribution of P and Zr. Specifically, an uneven distribution of Zr and P was not observed.
3. Aggregates of the substance adhering to the particles were observed (size: several tens of nanometers). It is considered that these aggregates correspond to the smoke-like aggregates in the TEM image.
4. There was a tendency that a large amount of (thick) aggregates were detected at the interparticle contact points.

TEM observation was performed in order to observe the covering state in more detail. All of the primary particles were covered with the smoke-like substance. The thickness of the coating film was measured at several points of each photograph at which the edge of titanium dioxide was relatively clearly observed. The thickness of the coating film thus measured was 1.7 nm or more.

### <Example c8>

### (Surface potential)

The surface potential of the particles of Example c2 was measured. The isoelectric point was pH 3.

This application claims a priority based on Japanese Patent Application No. 2012-287083 filed on December 28, 2012, Japanese Patent Application No. 2012-287117 filed on December 28, 2012, and Japanese Patent Application No. 2012-287113 filed on December 28, 2012, the entire disclosures of which are hereby incorporated by reference.

## Claims

1. A surface-coated particle comprising a titanium dioxide particle, and a coating film that covers the titanium dioxide particle,
the surface-coated particle comprising:
an element (a) that is phosphorus or sulfur; and
an element (b) that is at least one element selected from elements (excluding titanium) respectively belonging to Groups 2 to 12 in the periodic table,
a concentration of the element (a) in the surface-coated particle being 2 atom% or more, provided that a concentration of titanium in the surface-coated particle is 100 atom%, and
an atomic ratio "(b)/(a)" of the element (b) to the element (a) in the surface-coated particle being more than 0.5.

2. The surface-coated particle according to claim 1, wherein the element (a) is phosphorus.

3. The surface-coated particle according to claim 2, the surface-coated particle having a peak at a chemical shift of -11 to -15 ppm when analyzed by ³¹P-NMR spectroscopy.

4. The surface-coated particle according to any one of claims 1 to 3, the surface-coated particle having an isoelectric point of pH 4 or less, the isoelectric point being a point at which a zeta potential is 0.

5. The surface-coated particle according to any one of claims 1 to 4, the concentration of the element (a) in the surface-coated particle being 2 to 30 atom%, and a concentration of the element (b) in the surface-coated particle being more than 1 atom% and 40 atom% or less, provided that the concentration of titanium in the surface-coated particle is 100 atom%.

6. The surface-coated particle according to any one of claims 1 to 5, wherein the atomic ratio "(b)/(a)" of the element (b) to the element (a) is 1.0 or more.

7. The surface-coated particle according to any one of claims 1 to 6, wherein the coating film comprises a complex of the element (a) and the element (b).

8. A method for producing a surface-coated particle that comprises a titanium dioxide particle, and a coating film that covers the titanium dioxide particle,
the surface-coated particle comprising:
an element (a) that is phosphorus or sulfur; and
an element (b) that is at least one element selected from elements (excluding titanium) respectively belonging to Groups 2 to 12 in the periodic table,
a concentration of the element (a) in the surface-coated particle being 2 atom% or more, provided that a concentration of titanium in the surface-coated particle is 100 atom%, and
an atomic ratio "(b)/(a)" of the element (b) to the element (a) in the surface-coated particle being more than 0.5,
the method comprising:
mixing the titanium dioxide particle with a compound that comprises the element (a) to obtain a mixture; and
mixing the mixture with a solution that comprises an acidic metal salt that comprises the element (b), followed by drying or calcining, or both, to obtain the surface-coated particle.

9. The method for producing a surface-coated particle according to claim 8, wherein the element (a) is phosphorus.

10. An aqueous ink pigment comprising a titanium dioxide particle, and a coating film that covers the titanium dioxide particle,
the aqueous ink pigment comprising:
an element (a) that is phosphorus; and
an element (b) that is at least one element selected from zirconium, cerium, zinc, scandium, yttrium, hafnium, magnesium, and barium,
x, y, and z being present within (including a position on each side) an area enclosed by a quadrangle formed in a ternary diagram (x, y, z), the quadrangle having points A (91, 3, 6), B (84, 2, 14), C (79, 6, 15), and D (79, 9, 12) as vertices, x being a concentration (atom%) of titanium in the aqueous ink pigment, y being a concentration (atom%) of the element (a) in the aqueous ink pigment, and z being a concentration (atom%) of the element (b) in the aqueous ink pigment.

11. The aqueous ink pigment according to claim 10, the aqueous ink pigment having an isoelectric point of pH 4 or less, the isoelectric point being a point at which a zeta potential is 0.

12. The aqueous ink pigment according to claim 10 or 11, wherein the coating film comprises the element (a) and the element (b).

13. An aqueous ink composition comprising the aqueous ink pigment according to any one of claims 10 to 12.

14. A particle comprising a titanium dioxide particle, and at least one element selected from elements (excluding titanium) respectively belonging to Groups 2 to 12 in the periodic table,
a ratio (A_{BET(H2O)}/A_{BET(N2)}) of a specific surface area (A_{BET(H2O)}) of the particle determined using a water vapor adsorption method to a specific surface area (A_{BET(N2)}) of the particle determined using a nitrogen adsorption method being 1.0 or more.

15. The particle according to claim 14, wherein the elements respectively belonging to Groups 2 to 12 in the periodic table are zirconium, cerium, zinc, scandium, yttrium, hafnium, magnesium, and barium.

16. An aqueous dispersion comprising the particle according to claim 14 or 15, and an aqueous medium, a plurality of the particles being dispersed in the aqueous medium.

17. The aqueous dispersion according to claim 16, comprising the plurality of particles in a ratio of 1 to 60 wt% based on the aqueous dispersion (=100 wt%).
